# EUROPEAN PATENT APPLICATION

(11) **EP 4 603 967 A1**
(43) Date of publication of application: **20.08.2025**
(21) Application number: 23877125.7
(22) Date of filing: 25.09.2023
(51) Int. Cl.: G06F 8/654, B60R 16/02, G06F 8/658

(54) **INFORMATION PROCESSING DEVICE AND INFORMATION PROCESSING METHOD**

(30) Priority: 14.10.2022 JP 2022165576
(71) Applicant: Sony Group Corporation, Tokyo 108-0075 (JP)
(72) Inventor: NISHIBAYASHI Takuya, Tokyo 108-0075 (JP)
(74) Representative: Witte, Weller & Partner Patentanwälte mbB
(86) International application number: PCT/JP2023/034721
(87) International publication number: WO 2024/080119

(57) **Abstract**

The present technology relates to an information processing device and an information processing method that ensure appropriate software rollback.

The information processing device includes a software management unit that manages software and a storage unit that includes a first software area, a second software area, a first data area corresponding to the first software area, and a second data area corresponding to the second software area, and the software management unit stores current software in one software area, stores old software in the other software area, stores data in a format compatible with the current software in one data area, and stores data in a format compatible with the old software in the other data area. The present technology is applicable to, for example, vehicles.

## Description

### TECHNICAL FIELD

The present technology relates to an information processing device and an information processing method, and more particularly to an information processing device and an information processing method that ensure appropriate software rollback.

### BACKGROUND ART

A method has been proposed to manage, in a case of canceling the update of programs of a plurality of in-vehicle electronic control units (ECUs), cancellation and rollback methods for each ECU to maintain the overall health of the software of the in-vehicle system (see, for example, Patent Document 1).

### CITATION LIST

### PATENT DOCUMENT

Patent Document 1: Japanese Patent Application Laid-Open No. 2020-27630

### SUMMARY OF THE INVENTION

### PROBLEMS TO BE SOLVED BY THE INVENTION

The invention disclosed in Patent Document 1 is assumed to be based on a system configuration of traditional vehicles using a large number of single-function and highly independent ECUs. Furthermore, for the traditional vehicles, a data structure is an important element of software and is usually not modified from the time of shipment.

On the other hand, in the future, it is predicted that in high-performance vehicles such as connected cars, high-performance system on chips (SoCs) are used in ECUs, consolidating the ECUs and increasing their functionality. Then, as vehicles become increasingly software-driven, it is predicted that not only will software control increase, but also various kinds of operational data (such as user preference settings) will be retained, and the amount of data will increase, similar to modern personal computers (PCs) and smartphones.

Then, as seen with PCs and smartphones, it is predicted that, in a case where software continues to evolve, the data structure will be modified to align with the software evolution. In a case where the data structure has been modified, a process called data migration needs to be performed immediately after the software update to make the structure of the retained data tailored to the new software.

On the other hand, for in-vehicle software, rollback to a previous version of the software is mandatory as an emergency measure in a case where a failure occurs during or after the update.

However, when data migration is performed for a new version of the software to modify the data structure, there is a possibility that, in a case where rollback is performed, consistency with the previous version of the software is not maintained and the vehicle does not operate properly.

The present technology has been made in view of such circumstances and is intended to ensure appropriate software rollback.

### SOLUTIONS TO PROBLEMS

An information processing device according to a first aspect of the present technology includes: a software management unit that manages software; and a storage unit that includes a first software area, a second software area, a first data area corresponding to the first software area, and a second data area corresponding to the second software area, in which the software management unit stores first current software targeted for execution in one software area of the first software area or the second software area, stores first old software that is a version of software preceding the first current software in another software area, stores data in a format compatible with the first current software in one data area, corresponding to the one software area, of the first data area or the second data area, and stores data in a format compatible with the first old software in another data area.

An information processing method according to a second aspect of the present technology causes an information processing device to perform processing, the processing including: storing current software targeted for execution in one software area of a first software area or a second software area of a storage unit and storing old software that is a version of software preceding the current software in another software area; and storing data in a format compatible with the current software in one data area, corresponding to the one software area, of the first data area or the second data area of the storage unit and storing data in a format compatible with the old software in another data area.

According to the first aspect of the second aspect of the present technology, current software targeted for execution is stored in one software area of the first software area or the second software area of the storage unit and old software that is a version of software preceding the current software is stored in another software area, and data in a format compatible with the current software is stored in one data area, corresponding to the one software area, of the first data area or the second data area of the storage unit and data in a format compatible with the old software is stored in another data area.

### BRIEF DESCRIPTION OF DRAWINGS

Fig. 1 is a block diagram illustrating a configuration example of a NOR flash system.
Fig. 2 is a block diagram illustrating a configuration example of a NAND flash system.
Fig. 3 is a diagram illustrating a first data configuration example of a NAND flash memory of the NAND flash system.
Fig. 4 is a diagram illustrating a second data configuration example of the NAND flash memory of the NAND flash system.
Fig. 5 is a block diagram illustrating a configuration example of a vehicle control system.
Fig. 6 is a diagram illustrating an example of sensing areas.
Fig. 7 is a block diagram illustrating a configuration example of an information processing system to which the present technology is applied.
Fig. 8 is a block diagram illustrating a configuration example of a high-performance ECU.
Fig. 9 is a block diagram illustrating a configuration example of a legacy ECU.
Fig. 10 is a sequence diagram for describing a first embodiment of firmware (FW) update processing of the high-performance ECU.
Fig. 11 is a diagram illustrating an example of a state of a flash memory of the high-performance ECU during the first embodiment of the FW update processing of the high-performance ECU.
Fig. 12 is a sequence diagram for describing boot processing of the high-performance ECU.
Fig. 13 is a diagram illustrating an example of a state of the flash memory of the high-performance ECU during the boot processing of the high-performance ECU.
Fig. 14 is a sequence diagram for describing rollback processing of the high-performance ECU.
Fig. 15 is a diagram illustrating an example of a state of the flash memory of the high-performance ECU during the rollback processing of the high-performance ECU.
Fig. 16 is a sequence diagram for describing backup processing of the high-performance ECU.
Fig. 17 is a diagram illustrating an example of a state of the flash memory of the high-performance ECU during the backup processing of the high-performance ECU.
Fig. 18 is a sequence diagram for describing a second embodiment of the FW update processing of the high-performance ECU.
Fig. 19 is a diagram illustrating an example of a state of the flash memory of the high-performance ECU during the second embodiment of the FW update processing of the high-performance ECU.
Fig. 20 is a sequence diagram for describing a first embodiment of FW update processing of the legacy ECU.
Fig. 21 is a sequence diagram for describing the first embodiment of the FW update processing of the legacy ECU.
Fig. 22 is a diagram illustrating an example of a state of the flash memory of the high-performance ECU and a flash memory of the legacy ECU during the first embodiment of the FW update processing of the legacy ECU.
Fig. 23 is a sequence diagram for describing rollback processing of the legacy ECU.
Fig. 24 is a diagram illustrating an example of a state of the flash memory of the high-performance ECU and the flash memory of the legacy ECU during the rollback processing of the legacy ECU.
Fig. 25 is a sequence diagram for describing data backup processing of the legacy ECU.
Fig. 26 is a diagram illustrating an example of a state of the flash memory of the high-performance ECU and the flash memory of the legacy ECU during the data backup processing of the legacy ECU.
Fig. 27 is a sequence diagram for describing a second embodiment of the FW update processing of the legacy ECU.
Fig. 28 is a sequence diagram for describing the second embodiment of the FW update processing of the legacy ECU.
Fig. 29 is a diagram illustrating an example of a state of the flash memory of the high-performance ECU and the flash memory of the legacy ECU during the second embodiment of the FW update processing of the legacy ECU.
Fig. 30 is a block diagram illustrating a configuration example of a computer.

### MODE FOR CARRYING OUT THE INVENTION

Hereinafter, modes for carrying out the present technology will be described. The description will be given in the following order.
1. Background of present technology
2. Configuration example of vehicle control system
3. Embodiment
4. Modification
5. Others

### <<1. Background of present technology>>

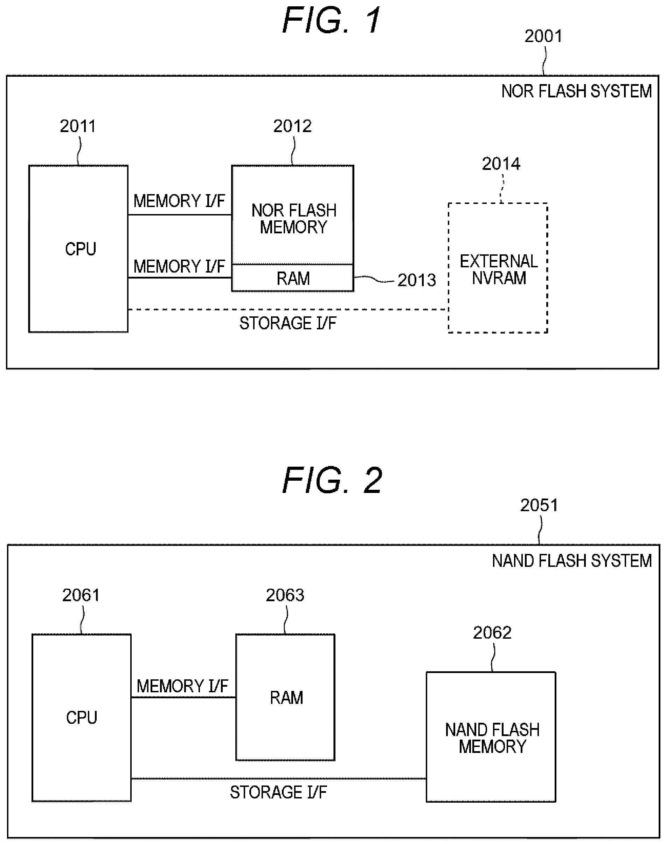

First, the background of the present technology will be described with reference to Figs. 1 to 4.

Fig. 1 illustrates a configuration example of a NOR flash system 2001 applied to traditional vehicles. The NOR flash system 2001 includes a central processing unit (CPU) 2011, a NOR flash memory 2012, and a random access memory (RAM) 2013. As the RAM 2013, for example, a static random access memory (SRAM) is used. Furthermore, an external non volatile random access memory (NVRAM) 2013 is provided, as necessary.

The CPU 2011 communicates with the NOR flash memory 2012 and the RAM2013 using a high-speed memory interface (I/F). On the other hand, the CPU communicates with the external NVRAM 2014 using a storage I/F slower than the memory I/F.

The NOR flash memory 2012 stores, for example, software to be executed by the CPU 2011 and data that is used by the software and needs to be retained. In a case where the capacity of the NOR flash memory 2012 is not sufficient, a part of the data is stored in the external NVRAM 2014. In the RAM 2013, for example, data that is temporarily used by the software and need not be retained is temporarily stored.

In the NOR flash system 2001, in a case where the CPU 2011 executes a program, first, a boot loader initializes hardware, and then sets the program counter to the address of a main program on the NOR flash memory 2012. This causes the main program to start to run while remaining stored in the NOR flash memory 2012.

Fig. 2 illustrates a configuration example of a NAND flash system 2051 applied to smartphones and the like. The NAND flash system 2051 includes a CPU 2061, a NAND flash memory 2062, and a RAM 2063. As the RAM 2063, for example, a double-data-rate synchronous dynamic random access memory (DDR SDRAM) is used.

The CPU 2061 communicates with the NAND flash memory 2062 using a high-speed storage I/F. The CPU 2061 communicates with the RAM 2063 using a memory I/F slower than the storage I/F.

The NAND flash memory 2062 stores, for example, software to be executed by the CPU 2061 and data that is used by the software and needs to be retained. In the RAM 2013, for example, software targeted for execution and data that is temporarily used by the software and need not be retained are temporarily stored.

In the NAND flash system 2051, in a case where the CPU 2061 executes a program, first, a boot loader initializes hardware, and then copies (shadows) a main program from the NAND flash memory 2062 to the RAM 2063. Then, the boot loader sets the program counter to the address of the main program loaded into the RAM 2063. This causes the main program loaded into the RAM 2063 to start to run. Furthermore, a required program is loaded into the RAM 2063, as necessary, and a program with a lower priority is purged from the RAM 2063.

Since the NOR flash memory 2012 can control data rewriting on a bit-by-bit basis, it avoids unnecessary processing and is generally reliable and long lasting compared to the NAND flash memory 2062. Furthermore, since the NOR flash memory 2012 supports execute-in-place (XiP), it has a shorter program boot-up time than the NAND flash system 2051. On the other hand, the NAND flash memory 2062 is lower in cost per bit and larger in capacity than the NOR flash memory 2012.

In traditional vehicles, ECUs are typically distributed according to their functions, and software installed on each ECU is relatively small in scale. Therefore, the ECUs of traditional vehicles have adopted an architecture using a NOR flash memory, such as the NOR flash system 2001 illustrated in Fig. 1.

On the other hand, in the future, it is predicted that vehicles including connected cars will become more software-driven, the software will become large in scale, and the amount of data processed by the software will increase. For example, it is predicted that rich operating systems (OSs), application frameworks, larger downloadable content, and the like will be used for human machine interfaces (HMIs) of vehicles, and the like. Furthermore, for example, in order to reduce costs and simplify software management, it is predicted that the number of ECUs will decrease, and each ECU will increase in functionality. Therefore, it is predicted that architectures using NOR flash memories will suffer a shortage of data capacity and an increase in costs.

Therefore, it is predicted that architectures using NAND flash memories, such as the NAND flash system 2051, will become the mainstream for ECUs of vehicles in the future. In fact, for information technology (IT) devices such as smartphones and digital cameras, and consumer electronics (CE) devices, the architectures using NAND flash memories are becoming dominant over those using NOR flash memories, due to an increase in software scale and data.

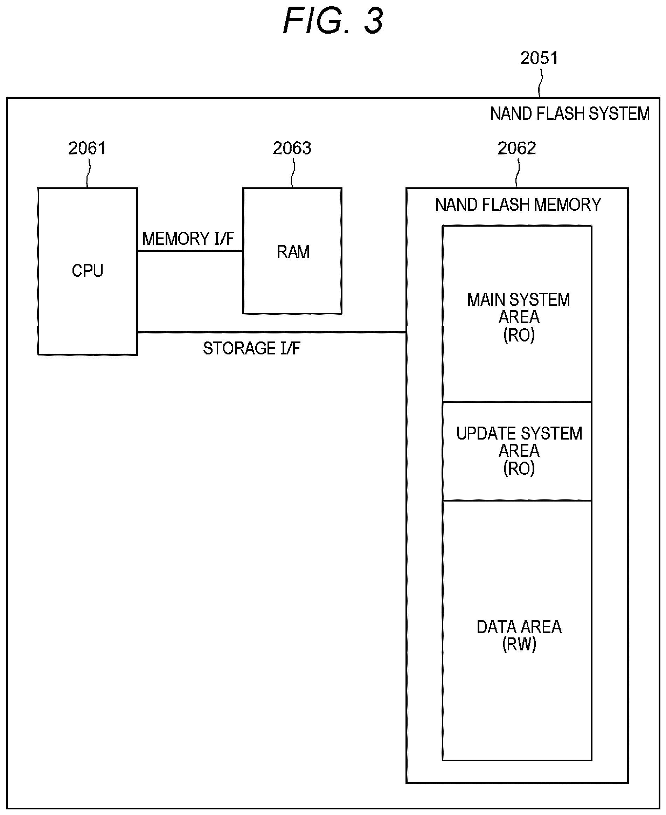

Fig. 3 illustrates a first example of a data structure of the NAND flash memory 2062 of the NAND flash system 2051.

In the NAND flash system 2051 illustrated in Fig. 3, the NAND flash memory 2062 includes a main system area, an update system area, and a data area.

The main system area stores software (group of programs) to be executed by the CPU 2061. The main system area is essentially non-rewritable (read only (RO)) except for a case where the software is updated.

The update system area stores software used to update the software in the main system area. The update system area is essentially non-rewritable (RO).

The data area is used by the NAND flash system 2051 and stores data that needs to be retained. The data area is rewritable (RW).

In a case where the software in the main system area is updated, it is technically possible to rewrite the software stored in the main system area using a program copied from the main system area to the RAM 2063. In this case, however, the program purged from the RAM 2063 cannot be reloaded, making the operation unstable.

Therefore, a program for update in the update system area is loaded into the RAM 2063 and executed to update the software in the main system area. In this case, during the software update, the NAND flash system 2051 stops its normal operation. Then, after the software in the main system area has been rewritten, when the NAND flash system 2051 is rebooted, the new software stored in the main system area is executed, and the NAND flash system 2051 starts its normal operation.

At this time, in a case where the data format that can be handled by the new software has been changed, the data migration is performed immediately after the software update. As a result, the format of data stored in the data area is converted into a format that can be handled by the new software.

Note that the data stored in the data area varies for each device or system including the NAND flash system 2051, and thus cannot be updated uniformly like software.

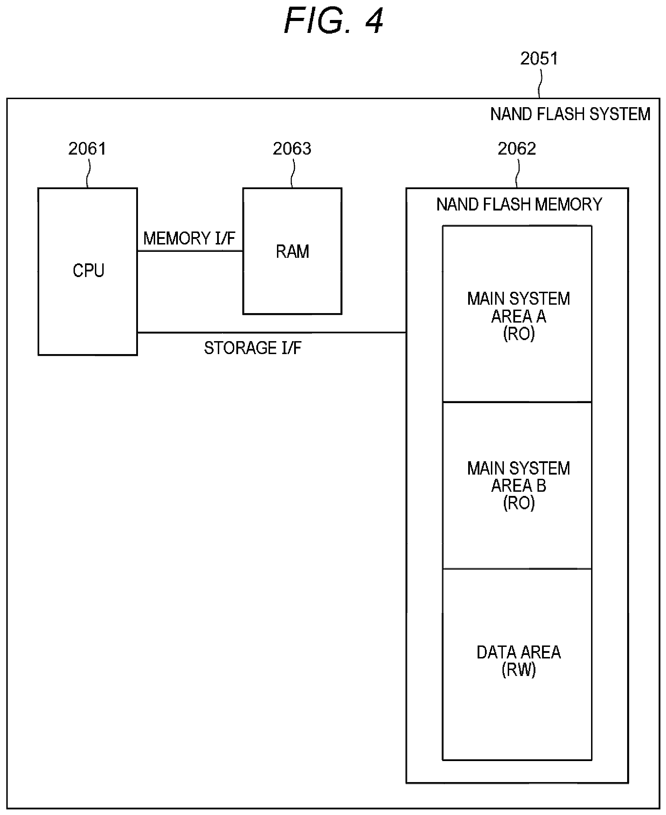

Fig. 4 illustrates a second example of the data structure of the NAND flash memory 2062 of the NAND flash system 2051.

In the NAND flash system 2051 illustrated in Fig. 4, the NAND flash memory 2062 includes a main system area A, a main system area B, and a data area.

In this architecture, it is possible to rewrite and update software in one of the main system area A or the main system area B, while software in the other area is running, for example.

Therefore, in a case where the NAND flash system 2051 is in normal operation, it is possible to install new software on the NAND flash memory 2062 and execute the new software after reboot. Note that, in a case where the data format that can be handled by the new software is changed, the data migration is performed upon reboot after installing the new software, for example.

This allows a reduction in the time that the NAND flash system 2051 stops its normal operation during the software update compared to the example illustrated in Fig. 3. Furthermore, since new software and old software can be stored at the same time, when the new software does not function correctly due to a bug or the like, it is possible to roll back the new software to the old software.

In a vehicle, to reduce the time that the vehicle cannot operate during the software update or to enable the vehicle to operate even with the old software when the new software does not function correctly, it is recommended to have software stored in two partitions; slot A and slot B, as in the architecture illustrated in Fig. 4.

However, after the software update, when the data migration is performed, even if the software is rolled back to the old software, the data in the data area is not in a format compatible with the old software. Therefore, there is a possibility that the old software will not function correctly.

Note that, for example, it is conceivable to assign different file names to the data in the data area for each format and switch the files to be used on the basis of a software version. However, in this case, the main system area where the file names are stored is also to be updated; therefore, there is a possibility that implementation and testing will be overlooked, leading to a breeding ground for bugs.

To address the above, the present technology is intended to ensure appropriate software rollback.

### <<2. Configuration example of vehicle control system>>

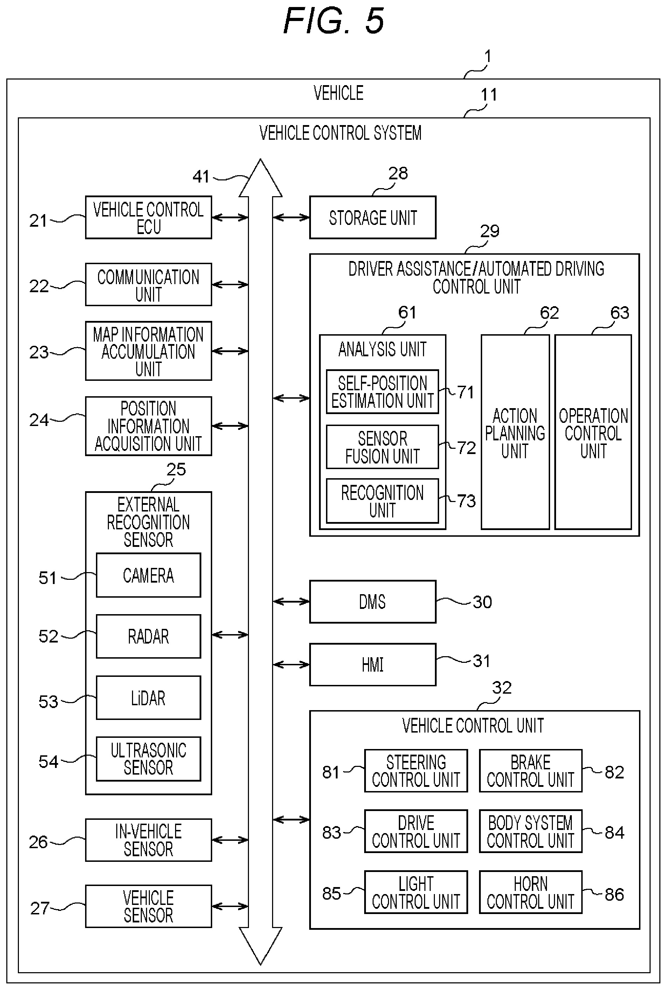

Fig. 5 is a block diagram illustrating a configuration example of a vehicle control system 11 that is an example of a mobile device control system to which the present technology is applied.

The vehicle control system 11 is provided in a vehicle 1, and performs processing relating to driver assistance and automated driving of the vehicle 1.

The vehicle control system 11 includes a vehicle control electronic control unit (ECU) 21, a communication unit 22, a map information accumulation unit 23, a position information acquisition unit 24, an external recognition sensor 25, an in-vehicle sensor 26, a vehicle sensor 27, a storage unit 28, a driver assistance/automated driving control unit 29, a driver monitoring system (DMS) 30, a human machine interface (HMI) 31, and a vehicle control unit 32.

The vehicle control ECU 21, the communication unit 22, the map information accumulation unit 23, the position information acquisition unit 24, the external recognition sensor 25, the in-vehicle sensor 26, the vehicle sensor 27, the storage unit 28, the driver assistance/automated driving control unit 29, the driver monitoring system (DMS) 30, the human machine interface (HMI) 31, and the vehicle control unit 32 are communicatively connected via a communication network 41. The communication network 41 includes, for example, an in-vehicle communication network, a bus, or the like conforming to a digital bidirectional communication standard such as a controller area network (CAN), a local interconnect network (LIN), a local area network (LAN), FlexRay (registered trademark), or Ethernet (registered trademark). The communication network 41 may be selectively used in a manner that depends on the type of data to be transmitted. For example, the CAN may be applied to data related to vehicle control, and the Ethernet may be applied to large-volume data. Note that each component of the vehicle control system 11 may be directly connected using wireless communication adapted to a relatively short-range communication, such as near field communication (NFC) or Bluetooth (registered trademark), without using the communication network 41, for example.

Note that, hereinafter, in a case where each component of the vehicle control system 11 performs communication via the communication network 41, the description of the communication network 41 will be omitted. For example, a case where the vehicle control ECU 21 and the communication unit 22 perform communication via the communication network 41 will be simply described as the vehicle control ECU 21 and the communication unit 22 performing communication.

For example, the vehicle control ECU 21 includes various processors such as a central processing unit (CPU) and a micro processing unit (MPU). The vehicle control ECU 21 controls all or some of the functions of the vehicle control system 11.

The communication unit 22 communicates with various devices inside and outside the vehicle, other vehicles, servers, base stations, and the like, and transmits and receives various types of data. In doing so, the communication unit 22 can perform communication using a plurality of communication schemes.

Communication with the outside of the vehicle executable by the communication unit 22 will be schematically described. The communication unit 22 communicates with a server (hereinafter referred to as external server) or the like present on an external network via a base station or an access point using a wireless communication method such as fifth generation mobile communication system (5G), long term evolution (LTE), dedicated short range communications (DSRC), or the like, for example. Examples of the external network over which the communication unit 22 performs communication include the Internet, a cloud network, a proprietary network, and the like. A communication method by which the communication unit 22 performs communication over the external network is not particularly limited as long as the method is a wireless communication method that allows digital bidirectional communication at a communication speed equal to or higher than a predetermined speed and over a distance equal to or longer than a predetermined distance.

Furthermore, the communication unit 22 can communicate with a terminal present in the vicinity of the host vehicle, using a peer to peer (P2P) technology, for example. The terminal present in the vicinity of the host vehicle is a terminal attached to a mobile object moving at a relatively low speed such as a pedestrian or a bicycle, a terminal stationarily installed in a store or the like, or a machine type communication (MTC) terminal, for example. Moreover, the communication unit 22 can also perform V2X communication. The V2X communication refers to communication between the host vehicle and another vehicle, such as vehicle to vehicle communication with another vehicle, vehicle to infrastructure communication with a roadside device or the like, vehicle to home communication, and vehicle to pedestrian communication with a terminal or the like carried by a pedestrian, for example.

The communication unit 22 can receive a program for updating software that controls the operation of the vehicle control system 11 from the outside (Over The Air), for example. The communication unit 22 can further receive map information, traffic information, information regarding the surroundings of the vehicle 1, and the like from the outside. Furthermore, the communication unit 22 can transmit information regarding the vehicle 1, information regarding the surroundings of the vehicle 1, and the like to the outside, for example. Examples of the information regarding the vehicle 1 transmitted to the outside by the communication unit 22 include data indicating a state of the vehicle 1, a recognition result from a recognition unit 73, and the like. Moreover, the communication unit 22 performs communication compatible with a vehicle emergency call system such as eCall, for example.

For example, the communication unit 22 receives an electromagnetic wave transmitted by Vehicle Information and Communication System (VICS) (registered trademark), such as a radio beacon, an optical beacon, or FM multiplex broadcasting.

Communication with the inside of the vehicle executable by the communication unit 22 will be schematically described. The communication unit 22 can communicate with each device in the vehicle using wireless communication, for example. The communication unit 22 can perform wireless communication with a device in the vehicle using a wireless communication method that allows digital bidirectional communication at a communication speed equal to or higher than a predetermined speed, such as wireless LAN, Bluetooth, NFC, or wireless universal serial bus (WUSB), for example. The communication unit 22 can also communicate with each device in the vehicle using wired communication, rather than wireless communication. For example, the communication unit 22 can communicate with each device in the vehicle using wired communication via a cable connected to a connecting terminal not illustrated in the drawing. The communication unit 22 can communicate with each device in the vehicle using a wired communication method that allows digital bidirectional communication at a communication speed equal to or higher than a predetermined speed, such as universal serial bus (USB), high-definition multimedia interface (HDMI) (registered trademark), or mobile high-definition link (MHL), for example.

Here, the device in the vehicle refers to, for example, a device that is not connected to the communication network 41 in the vehicle. Possible examples of the device in the vehicle include a mobile device and a wearable device carried by an occupant such as a driver, an information device brought into the vehicle and temporarily installed, and the like.

The map information accumulation unit 23 accumulates either or both of a map acquired from the outside and a map created by the vehicle 1. For example, the map information accumulation unit 23 accumulates a three-dimensional high-precision map, a global map that is lower in precision but wider in covering area than the high-precision map, and the like.

Examples of the high-precision map include a dynamic map, a point cloud map, a vector map, and the like. The dynamic map is a map including four layers: dynamic information, semi-dynamic information, semi-static information, and static information, and is provided to the vehicle 1 from the external server or the like, for example. The point cloud map is a map including a point cloud (point cloud data). The vector map is, for example, a map adapted to an advanced driver assistance system (ADAS) or autonomous driving (AD), the map being obtained by associating traffic information such as lane positions and traffic light positions with a point cloud map.

The point cloud map and the vector map may be provided from, for example, the external server or the like, or may be created by the vehicle 1 as a map for matching with a local map to be described later on the basis of a sensing result from a camera 51, a radar 52, a LiDAR 53, or the like, and may be accumulated in the map information accumulation unit 23. Alternatively, in a case where the high-precision map is provided from the external server or the like, to reduce the communication volume, map data of several hundred meters square regarding a planned route that the vehicle 1 will follow is acquired from the external server or the like, for example.

The position information acquisition unit 24 receives a global navigation satellite system (GNSS) signal from a GNSS satellite, and acquires position information of the vehicle 1. The acquired position information is supplied to the driver assistance/automated driving control unit 29. Note that the position information acquisition unit 24 may acquire the position information using not only a GNSS signal but also a beacon, for example.

The external recognition sensor 25 includes various sensors that are used to recognize conditions outside the vehicle 1, and supplies sensor data from each sensor to each component of the vehicle control system 11. The type and number of the sensors included in the external recognition sensor 25 are determined as desired.

For example, the external recognition sensor 25 includes the camera 51, the radar 52, the light detection and ranging or laser imaging detection and ranging (LiDAR) 53, and an ultrasonic sensor 54. Alternatively, the external recognition sensor 25 is only required to include at least one of the camera 51, the radar 52, the LiDAR 53, or the ultrasonic sensor 54. The numbers of cameras 51, radars 52, LiDARs 53, and ultrasonic sensors 54 are not particularly limited as long as the numbers are practically feasible to be installed in the vehicle 1. Furthermore, the types of sensors included in the external recognition sensor 25 are not limited to this example, and the external recognition sensor 25 may include a sensor of some other type. An example of the sensing area of each sensor included in the external recognition sensor 25 will be described later.

Note that the imaging method of the camera 51 is not particularly limited. For example, cameras adapted to various imaging methods that allow distance measurement, such as a time of flight (ToF) camera, a stereo camera, a monocular camera, and an infrared camera, can be used as the camera 51, as necessary. The camera 51 is not limited to such cameras and may be a camera for simply acquiring a captured image without distance measurement.

Furthermore, for example, the external recognition sensor 25 can include an environment sensor for detecting the environment around the vehicle 1. The environment sensor is a sensor for detecting an environment such as weather, climate, and brightness, and can include, for example, various sensors such as a raindrop sensor, a fog sensor, a sunshine sensor, a snow sensor, and an illuminance sensor.

Moreover, for example, the external recognition sensor 25 includes a microphone used for detecting sound around the vehicle 1, a position of a sound source, and the like.

The in-vehicle sensor 26 includes various sensors for detecting information regarding the inside of the vehicle, and supplies sensor data from each sensor to each component of the vehicle control system 11. The type and number of the various sensors included in the in-vehicle sensor 26 are not particularly limited as long as the type and number are practically feasible to be installed in the vehicle 1.

For example, the in-vehicle sensor 26 can include one or more types of sensors among a camera, a radar, a seating sensor, a steering wheel sensor, a microphone, and a biometric sensor. As the camera included in the in-vehicle sensor 26, for example, cameras adapted to various imaging methods that allow distance measurement, such as a ToF camera, a stereo camera, a monocular camera, and an infrared camera, can be used. The camera included in the in-vehicle sensor 26 is not limited to such cameras, and may be a camera for simply acquiring a captured image without distance measurement. The biometric sensor included in the in-vehicle sensor 26 is disposed on a seat, a steering wheel, or the like, for example, and detects various types of biometric information regarding an occupant such as a driver.

The vehicle sensor 27 includes various sensors for detecting the state of the vehicle 1, and supplies sensor data from each sensor to each component of the vehicle control system 11. The type and number of the various sensors included in the vehicle sensor 27 are not particularly limited as long as the type and number are practically feasible to be installed in the vehicle 1.

For example, the vehicle sensor 27 includes a speed sensor, an acceleration sensor, an angular velocity sensor (gyroscope), and an inertial measurement unit (IMU) obtained by integrating these sensors. For example, the vehicle sensor 27 includes a steering angle sensor that detects a steering angle of the steering wheel, a yaw rate sensor, an accelerator sensor that detects an operation amount of an accelerator pedal, and a brake sensor that detects an operation amount of a brake pedal. For example, the vehicle sensor 27 includes a rotation sensor that detects an engine speed or a motor speed, a pneumatic sensor that detects a tire pressure, a slip rate sensor that detects a tire slip rate, and a wheel speed sensor that detects a wheel speed. For example, the vehicle sensor 27 includes a battery sensor that detects a remaining battery level and a battery temperature, and an impact sensor that detects external impact.

The storage unit 28 includes at least one of a nonvolatile storage medium or a volatile storage medium, and stores data and programs. The storage unit 28 is used as, for example, an electrically erasable programmable read only memory (EEPROM) and a random access memory (RAM), and a magnetic storage device such as a hard disc drive (HDD), a semiconductor storage device, an optical storage device, and a magneto-optical storage device can be used as a storage medium. The storage unit 28 stores various programs and data to be used by each component of the vehicle control system 11. For example, the storage unit 28 includes an event data recorder (EDR) and a data storage system for automated driving (DSSAD), and stores information regarding the vehicle 1 before and after an event such as an accident, and information acquired by the in-vehicle sensor 26.

The driver assistance/automated driving control unit 29 controls driver assistance and automated driving of the vehicle 1. For example, the driver assistance/automated driving control unit 29 includes an analysis unit 61, an action planning unit 62, and an operation control unit 63.

The analysis unit 61 performs analysis processing on the vehicle 1 and conditions around the vehicle 1. The analysis unit 61 includes a self-position estimation unit 71, a sensor fusion unit 72, and the recognition unit 73.

The self-position estimation unit 71 estimates the self-position of the vehicle 1 on the basis of sensor data from the external recognition sensor 25 and the high-precision map accumulated in the map information accumulation unit 23. For example, the self-position estimation unit 71 generates a local map on the basis of sensor data from the external recognition sensor 25, and performs matching between the local map and the high-precision map to estimate the self-position of the vehicle 1. The position of the vehicle 1 is based on, for example, the center of a rear wheel pair axle.

Examples of the local map include a three-dimensional high-precision map created by using a technology such as simultaneous localization and mapping (SLAM), an occupancy grid map, and the like. The three-dimensional high-precision map is the above-described point cloud map or the like, for example. The occupancy grid map is a map in which a three-dimensional or two-dimensional space around the vehicle 1 is divided into grids of a predetermined size, and an occupancy state of an object is indicated in units of grids. The occupancy state of the object is indicated by the presence or absence, or existence probability of the object, for example. The local map is also used in detection processing and recognition processing performed on the conditions outside the vehicle 1 by the recognition unit 73, for example.

Note that the self-position estimation unit 71 may estimate the self-position of the vehicle 1 on the basis of the position information acquired by the position information acquisition unit 24 and the sensor data from the vehicle sensor 27.

The sensor fusion unit 72 performs sensor fusion processing of combining a plurality of different types of sensor data (for example, image data supplied from the camera 51 and sensor data supplied from the radar 52), to acquire new information. Methods for combining different types of sensor data include integration, fusion, association, and the like.

The recognition unit 73 performs the detection processing on the conditions outside the vehicle 1 and the recognition processing on the conditions outside the vehicle 1.

For example, the recognition unit 73 performs the detection processing and recognition processing on the conditions outside the vehicle 1 on the basis of information from the external recognition sensor 25, information from the self-position estimation unit 71, information from the sensor fusion unit 72, and the like.

Specifically, for example, the recognition unit 73 performs detection processing, recognition processing, and the like of on an object around the vehicle 1. The object detection processing is, for example, processing of detecting the presence or absence, size, shape, position, motion, and the like of an object. The object recognition processing is, for example, processing of recognizing an attribute such as a type of an object or identifying a specific object. The detection processing and the recognition processing, however, are not necessarily clearly separated and may overlap.

For example, the recognition unit 73 detects an object around the vehicle 1 by performing clustering to classify point clouds based on sensor data from the radar 52, the LiDAR 53, or the like into clusters of point clouds. This allows for the detection of the presence or absence, size, shape, and position of the object around the vehicle 1.

For example, the recognition unit 73 detects the motion of the object around the vehicle 1 by performing tracking to follow the motion of the cluster of point clouds classified by clustering. This allows for the detection of the speed and traveling direction (movement vector) of the object around the vehicle 1.

For example, the recognition unit 73 detects or recognizes a vehicle, a person, a bicycle, an obstacle, a structure, a road, a traffic light, a traffic sign, a road sign, and the like, on the basis of image data supplied from the camera 51. Furthermore, the recognition unit 73 may recognize the type of the object around the vehicle 1 by performing recognition processing such as semantic segmentation.

For example, the recognition unit 73 can perform recognition processing on traffic rules around the vehicle 1 on the basis of the map accumulated in the map information accumulation unit 23, the result of estimating the self-position from the self-position estimation unit 71, and the result of recognizing the object around the vehicle 1 from the recognition unit 73. Through this processing, the recognition unit 73 can recognize the positions and states of traffic lights, the details of traffic signs and road signs, the details of traffic regulations, drivable lanes, and the like.

For example, the recognition unit 73 can perform recognition processing on a surrounding environment of the vehicle 1. Possible examples of the surrounding environment to be recognized by the recognition unit 73 include weather, air temperature, humidity, brightness, road surface conditions, and the like.

The action planning unit 62 creates an action plan of the vehicle 1. For example, the action planning unit 62 creates the action plan by performing path planning and path following processing.

Note that the path planning (global path planning) is processing of planning a rough path from a start to a goal. This path planning also includes processing called trajectory planning in which trajectory generation (local path planning) is performed, the local path planning enabling safe and smooth advancing in the vicinity of the vehicle 1 in consideration of the motion characteristics of the vehicle 1 in the planned path.

The path following is processing of planning operations for safe and accurate travelling along the path planned by the path planning within a planned time. For example, the action planning unit 62 can calculate a target speed and a target angular velocity of the vehicle 1, on the basis of the result of the path following processing.

The operation control unit 63 controls operations of the vehicle 1 to achieve the action plan created by the action planning unit 62.

For example, the operation control unit 63 controls a steering control unit 81, a brake control unit 82, and a drive control unit 83 included in the vehicle control unit 32 to be described later to perform acceleration and deceleration control and direction control to make the vehicle 1 follow the path calculated by the trajectory planning. For example, the operation control unit 63 performs coordinated control to achieve ADAS functions such as collision avoidance or mitigation, follow driving, speed maintenance driving, collision warning for the host vehicle, lane departure warning for the host vehicle, and the like. For example, the operation control unit 63 performs coordinated control to achieve automated driving or the like in which a vehicle autonomously travels without depending on the operation by the driver.

The DMS 30 performs authentication processing on the driver, recognition processing on the state of the driver, and the like on the basis of sensor data from the in-vehicle sensor 26, data input to the HMI 31 to be described later, and the like. The state of the driver to be recognized may be a physical condition, an alertness level, a concentration level, a fatigue level, a line-of-sight direction, a drunkenness level, a driving operation, a posture, or the like, for example.

Note that the DMS 30 may perform authentication processing on an occupant other than the driver, and recognition processing on the state of the occupant. Furthermore, the DMS 30 may perform recognition processing on the conditions inside the vehicle on the basis of sensor data from the in-vehicle sensor 26, for example. Possible examples of the conditions inside the vehicle to be recognized include temperature, humidity, brightness, odor, and the like.

The HMI 31 receives inputs of various types of data, instructions, or the like, and presents various types of data to the driver or the like.

The input of data through the HMI 31 will be schematically described. The HMI 31 includes an input device for a person to input data. The HMI 31 generates an input signal on the basis of data, an instruction, or the like that has been input through the input device, and supplies the input signal to each component of the vehicle control system 11. The HMI 31 includes an operation element such as a touch panel, a button, a switch, and a lever as the input device, for example. The HMI 31 may further include an input device capable of inputting information by a method such as voice or gesture other than manual operation. Moreover, the HMI 31 may use, for example, a remote control device using infrared rays or radio waves, or an external connected device such as a mobile device or a wearable device adapted to the operation of the vehicle control system 11, as the input device.

How the HMI 31 present data will be schematically described. The HMI 31 generates visual information, audio information, and haptic information regarding the occupant or the outside of the vehicle. Furthermore, the HMI 31 performs output control for controlling the output, output content, output timing, output method, and the like of each piece of generated information. The HMI 31 generates and outputs, as the visual information, information indicated by images or light, such as an operation screen, a display of the state of the vehicle 1, a warning display, and a monitor image indicating the condition around the vehicle 1, for example. Furthermore, the HMI 31 generates and outputs, as the audio information, information indicated by sounds, such as voice guidance, a warning sound, and a warning message, for example. Moreover, the HMI 31 generates and outputs, as the haptic information, information to be given to the tactile sense of the occupant by force, vibration, motion, or the like, for example.

As an output device from which the HMI 31 outputs the visual information, for example, a display device that presents the visual information by displaying an image by itself or a projector device that presents the visual information by projecting an image can be used. Note that the display device may be a device that displays the visual information in the field of view of the occupant, such as a head-up display, a transmissive display, or a wearable device having an augmented reality (AR) function, for example, in addition to a display device having a normal display. Furthermore, in the HMI 31, a display device included in a navigation device, an instrument panel, a camera monitoring system (CMS), an electronic mirror, a lamp, or the like provided in the vehicle 1 can also be used as the output device that outputs the visual information.

As the output device from which the HMI 31 outputs the audio information, an audio speaker, headphones, or earphones can be used, for example.

As the output device from which the HMI 31 outputs the haptic information, a haptic element using a haptic technology can be used, for example. The haptic element is provided, for example, at a portion to be touched by the occupant of the vehicle 1, such as the steering wheel or the seat.

The vehicle control unit 32 controls each component of the vehicle 1. The vehicle control unit 32 includes the steering control unit 81, the brake control unit 82, the drive control unit 83, a body system control unit 84, a light control unit 85, and a horn control unit 86.

The steering control unit 81 performs detection, control, and the like of the state of a steering system of the vehicle 1. The steering system includes, for example, a steering mechanism including a steering wheel and the like, an electric power steering, and the like. The steering control unit 81 includes, for example, a steering ECU that controls the steering system, an actuator that drives the steering system, and the like.

The brake control unit 82 performs detection, control, and the like of the state of a brake system of the vehicle 1. The brake system includes, for example, a brake mechanism including a brake pedal and the like, an antilock brake system (ABS), a regenerative brake mechanism, and the like. The brake control unit 82 includes, for example, a brake ECU that controls the brake system, an actuator that drives the brake system, and the like.

The drive control unit 83 performs detection, control, and the like of the state of a drive system of the vehicle 1. The drive system includes, for example, an accelerator pedal, a driving force generation device for generating a driving force such as an internal combustion engine or a driving motor, a driving force transmission mechanism for transmitting the driving force to wheels, and the like. The drive control unit 83 includes, for example, a drive ECU that controls the drive system, an actuator that drives the drive system, and the like.

The body system control unit 84 performs detection, control, and the like of the state of a body system of the vehicle 1. The body system includes, for example, a keyless entry system, a smart key system, a power window device, a power seat, an air conditioner, an airbag, a seat belt, a shift lever, and the like. The body system control unit 84 includes, for example, a body system ECU that controls the body system, an actuator that drives the body system, and the like.

The light control unit 85 performs detection, control, and the like of the states of various lights of the vehicle 1. Possible examples of the lights to be controlled include a headlight, a backlight, a fog light, a turn signal, a brake light, a projection light, a bumper indicator, and the like. The light control unit 85 includes a light ECU that controls the lights, an actuator that drives the lights, and the like.

The horn control unit 86 performs detection, control, and the like of the state of a car horn of the vehicle 1. The horn control unit 86 includes, for example, a horn ECU that controls the car horn, an actuator that drives the car horn, and the like.

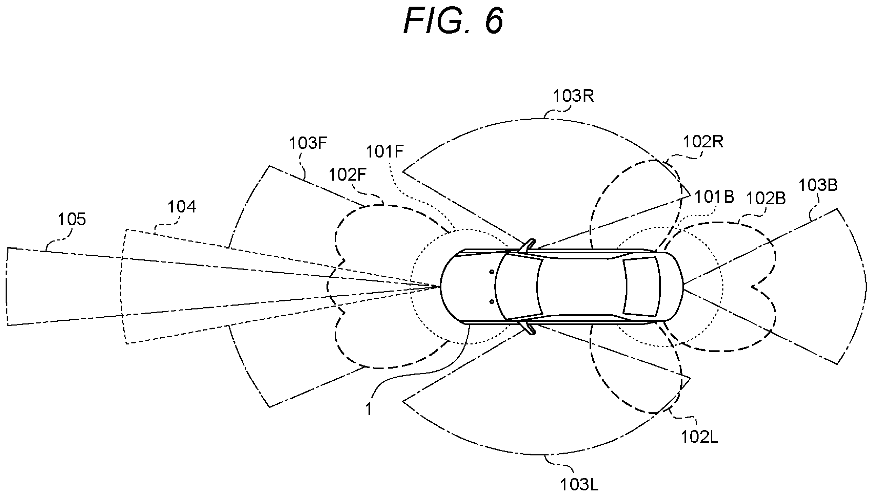

Fig. 6 is a diagram illustrating an example of a sensing area covered by the camera 51, the radar 52, the LiDAR 53, the ultrasonic sensor 54, and the like of the external recognition sensor 25 illustrated in Fig. 5. Note that Fig. 6 schematically illustrates the vehicle 1 as viewed from above, where the left end side is a front end (front) side of the vehicle 1 and the right end side is a rear end (rear) side of the vehicle 1.

A sensing area 101F and a sensing area 101B indicate examples of the sensing area of the ultrasonic sensor 54. The sensing area 101F covers an area around the front end of the vehicle 1 with a plurality of the ultrasonic sensors 54. The sensing area 101B covers an area around the rear end of the vehicle 1 with a plurality of the ultrasonic sensors 54.

Sensing results in the sensing area 101F and the sensing area 101B are used for parking assistance for the vehicle 1, and the like, for example.

Sensing areas 102F to 102B indicate examples of the sensing area of a short-range or mid-range radar 52. The sensing area 102F covers an area extending farther than the sensing area 101F in front of the vehicle 1. The sensing area 102B covers an area extending farther than the sensing area 101B behind the vehicle 1. The sensing area 102L covers an area around the rear left side of the vehicle 1. The sensing area 102R covers an area around the rear right side of the vehicle 1.

A sensing result in the sensing area 102F is used for detection of a vehicle, a pedestrian, or the like present in front of the vehicle 1, and the like, for example. A sensing result in the sensing area 102B is used for a collision prevention function of preventing a collision of the rear side of the vehicle 1, and the like, for example. Sensing results in the sensing area 102L and the sensing area 102R are used for detection of an object in a blind spot on the sides of the vehicle 1, and the like, for example.

Sensing areas 103F to 103B indicate examples of the sensing area of the camera 51. The sensing area 103F covers an area extending farther than the sensing area 102F in front of the vehicle 1. The sensing area 103B covers an area extending farther than the sensing area 102B behind the vehicle 1. The sensing area 103L covers an area around the left side of the vehicle 1. The sensing area 103R covers an area around the right side of the vehicle 1.

A sensing result in the sensing area 103F can be used for recognition of a traffic light or a traffic sign, a lane departure prevention assistance system, and an automated headlight control system, for example. A sensing result in the sensing area 103B can be used for parking assistance and a surround view system, for example. Sensing results in the sensing area 103L and the sensing area 103R can be used for a surround view system, for example.

A sensing area 104 indicates an example of the sensing area of the LiDAR 53. The sensing area 104 covers an area extending farther than the sensing area 103F in front of the vehicle 1. However, the sensing area 104 has a narrower range in a lateral direction than the sensing area 103F.

A sensing result in the sensing area 104 is used for detection of an object such as a neighboring vehicle, for example.

A sensing area 105 indicates an example of the sensing area of a long-range radar 52. The sensing area 105 covers an area extending farther than the sensing area 104 in front of the vehicle 1. However, the sensing area 105 has a narrower range in the lateral direction than the sensing area 104.

A sensing result in the sensing area 105 is used for adaptive cruise control (ACC), emergency braking, collision avoidance, and the like, for example.

Note that the sensing areas of the sensors including the camera 51, the radar 52, the LiDAR 53, and the ultrasonic sensor 54 included in the external recognition sensor 25 may have various configurations other than those in Fig. 6. Specifically, the ultrasonic sensor 54 may also perform sensing on the sides of the vehicle 1, or the LiDAR 53 may perform sensing on the rear side of the vehicle 1. Furthermore, the installation position of each sensor is not limited to the above-described example. Furthermore, the number of each sensor may be one or more.

### <<3. Embodiment>>

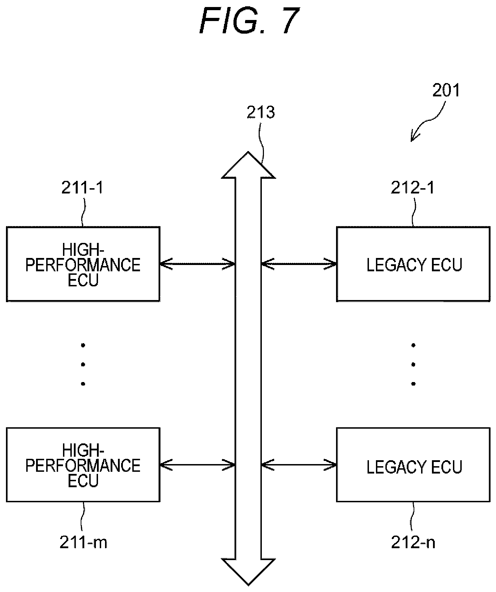

Next, an embodiment of the present technology will be described with reference to Figs. 7 to 19.

### <Configuration example of information processing system 201>

Fig. 7 illustrates a configuration example of an information processing system 201 to which the present technology is applied.

The information processing system 201 is, for example, a system that achieves functions mainly performed by software among the functions of the vehicle control system 11 of the vehicle 1 illustrated in Fig. 5.

The information processing system 201 includes high-performance ECUs 211-1 to 211-m, and legacy ECUs 212-1 to 212-n. The high-performance ECUs 211-1 to 211-m and the legacy ECUs 212-1 to 212-n are each connected to a bus 213 for mutual communication.

Hereinafter, the high-performance ECUs 211-1 to 211-m will be simply referred to as high-performance ECU 211 unless otherwise distinguished. Hereinafter, the legacy ECUs 212-1 to 212-n will be simply referred to as legacy ECU 212 unless otherwise distinguished. Hereinafter, in a case where the ECUs communicate via the bus 213, the description of the bus 213 will be omitted. For example, a case where the high-performance ECU 211 and the legacy ECU 212 communicate via the bus 213 will be simply referred to as that the high-performance ECU 211 and the legacy ECU 212 communicate.

The high-performance ECU 211 is, for example, a high-performance ECU equipped with an SoC. The high-performance ECU 211 is, for example, an ECU with integrated functions. That is, one high-performance ECU 211 can perform various functions of the vehicle 1. Furthermore, the high-performance ECU 211 controls software upgrade and rollback of the legacy ECU 212, as necessary.

The legacy ECU 212 is, for example, an ECU with lower performance than the high-performance ECU 211. For example, the legacy ECU 212 is an ECU with limited functions as found in traditional vehicles.

Note that the number of high-performance ECUs 211 and the number of legacy ECUs 212 are not particularly limited. Furthermore, the legacy ECU 212 need not necessarily be provided in the information processing system 201.

### <Configuration example of high-performance ECU 211>

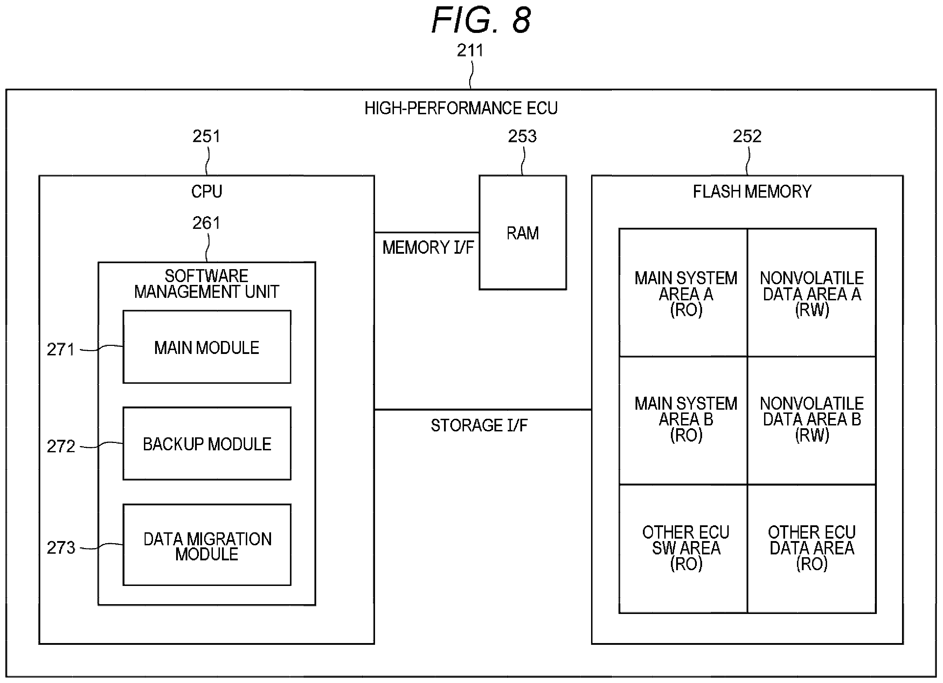

Fig. 8 illustrates a configuration example of the high-performance ECU 211. The high-performance ECU 211 is similar in configuration to the NAND flash system 2051 illustrated in Fig. 2. The high-performance ECU 211 includes a CPU 251, a flash memory 252, and a RAM 253. As the flash memory 252, for example, a NAND flash memory is used. As the RAM 253, for example, a DDR SDRAM is used.

The CPU 251 communicates with the flash memory 252 using a storage I/F. The CPU 251 communicates with the RAM 253 using a memory I/F.

The CPU 251 executes a predetermined control program to implement a software management unit 261 that manages software and data stored in the flash memory 252. The software management unit 261 includes a main module 271, a backup module 272, and a data migration module 273.

The main module 271 controls the entire software management unit 261 while communicating with the outside. For example, the main module 271 controls software execution, and software upgrade and rollback of the high-performance ECU 211. Furthermore, the main module 271 controls, for example, software upgrade and rollback of the legacy ECU 212, as necessary.

The backup module 272 controls, for example, software and data backup of the high-performance ECU 211. Furthermore, the backup module 272 controls, for example, software and data backup of the legacy ECU 212, as necessary.

The data migration module 273 controls, for example, data migration of the high-performance ECU 211. Furthermore, the data migration module 273 controls, for example, data migration of the legacy ECU 212, as necessary.

The flash memory 252 stores, for example, software to be executed by the CPU 251 and data that is used by the software and needs to be retained. Furthermore, the flash memory 252 stores (backs up), for example, software and data of the legacy ECU 212, as necessary.

The flash memory 252 includes a main system area A, a nonvolatile data area A, a main system area B, a nonvolatile data area B, an other ECU SW area, and an other ECU data area.

The main system area A and the main system area B each store software to be executed by the CPU 251. The main system area A and the main system area B can each store different versions of software. The main system area A and the main system area B are essentially non-rewritable (read only (RO)) except for a case where the software is updated.

The nonvolatile data area A is an area corresponding to the main system area A, and stores data used by the software stored in the main system area A. The nonvolatile data area A is rewritable (RW).

The nonvolatile data area B is an area corresponding to the main system area B, and stores data used by the software stored in the main system area B. The nonvolatile data area B is rewritable (RW).

The other ECU SW area is an area used to back up the software of the legacy ECU 212. The other ECU SW area is essentially non-rewritable (RO) except for a case where the software is backed up.

The other ECU data area is an area used to back up the data of the legacy ECU 212. The other ECU data area is essentially non-rewritable (RO) except for a case where the data is backed up.

Note that, in this drawing, the other ECU SW area and the other ECU data area are each shown as one, but the numbers of the other ECU SW areas and the other ECU data areas are not particularly limited. For example, the numbers of the other ECU SW areas and the other ECU data areas are set on the basis of the number of legacy ECUs 212 for which software and data are backed up.

In the RAM 253, for example, software targeted for execution, data that is temporarily used by the software and need not be retained are temporarily stored.

### <Configuration example of legacy ECU 212>

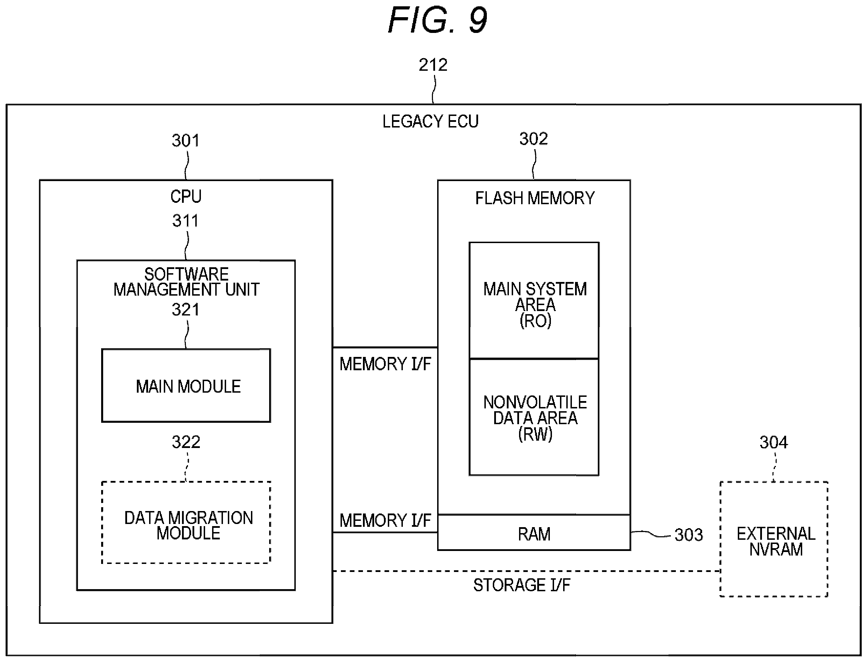

Fig. 9 illustrates a configuration example of the legacy ECU 212. The legacy ECU 212 is similar in configuration to the NOR flash system 2001 illustrated in Fig. 1. The legacy ECU 212 includes a CPU 301, a flash memory 302, and a RAM 303. As the flash memory 302, for example, a NOR flash memory is used. As the RAM 303, for example, an SRAM is used. Furthermore, an external NVRAM 304 is provided, as necessary.

The CPU 301 communicates with the flash memory 302 and the RAM 303 using a storage I/F. The CPU 301 communicates with the external NVRAM 304 using a memory I/F.

The CPU 301 executes a predetermined control program to implement a software management unit 311 that manages software and data stored in the flash memory 302. The software management unit 311 includes a main module 321 and a data migration module 322.

The main module 321 controls the entire software management unit 311 while communicating with the outside. For example, the main module 321 controls software execution, and software upgrade and rollback of the legacy ECU 212.

The data migration module 322 controls, for example, data migration of the legacy ECU 212. Note that the data migration module 322 need not be necessarily provided.

The flash memory 302 stores, for example, software to be executed by the CPU 301 and data that is used by the software and needs to be retained.

The flash memory 302 includes a main system area and a nonvolatile data area.

The main system area stores the software to be executed by the CPU 301. The main system area is essentially non-rewritable (RO) except for a case where the software is updated or rolled back.

The nonvolatile data area is an area corresponding to the main system area A, and stores data used by the software stored in the main system area A. The nonvolatile data area is rewritable (RW).

In the RAM 303, for example, data that is temporarily used by the software and need not be retained is temporarily stored.

In a case where the capacity of the flash memory 302 is not sufficient, the external NVRAM 304 stores a part of the data.

### <Processing of information processing system 201>

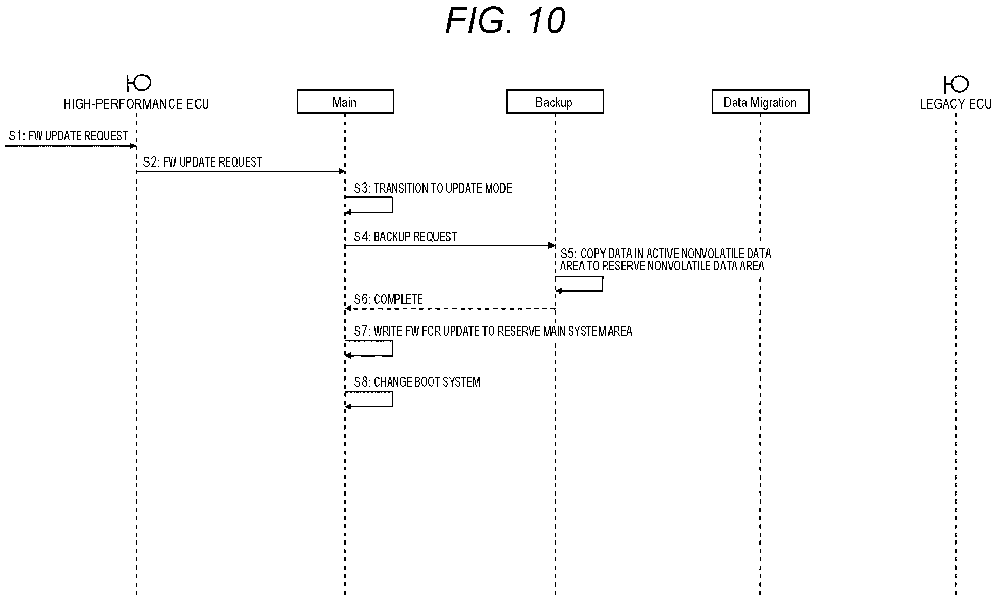

Next, processing of the information processing system 201 will be described with reference to Figs. 10 to 29. Specifically, processing related to update, rollback, and the like of firmware (hereinafter, referred to as FW) that is software installed on and executed by the high-performance ECU 211 and the legacy ECU 212 will be described below.

### <First embodiment of FW update processing of high-performance ECU 211>

First, a first embodiment of FW update processing of the high-performance ECU 211 will be described with reference to the sequence diagram in Fig. 10.

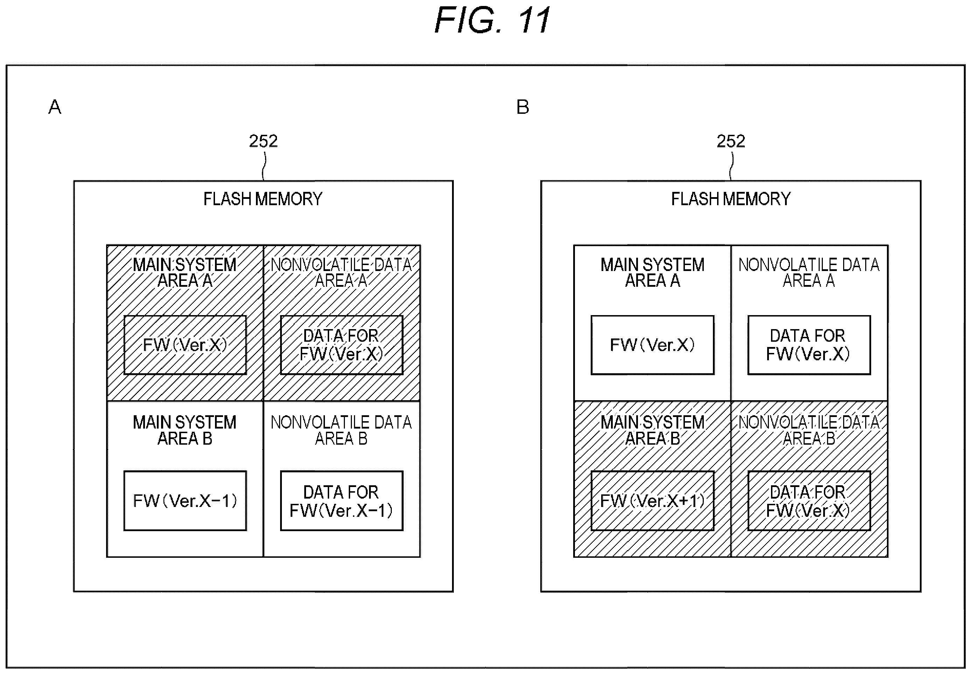

Note that it is assumed hereinafter that the flash memory 252 of the high-performance ECU 211 is in a state illustrated in A of Fig. 11.

Specifically, it is assumed that FW(Ver.X) currently targeted for execution is stored in the main system area A. It is assumed that data for the FW(Ver.X) that is in a format compatible with the FW(Ver.X) and is used by the FW(Ver.X) is stored in the nonvolatile data area A. It is assumed that FW(Ver.X-1) that is the previous version of the FW(Ver.X) is stored in the main system area B. It is assumed that data for the FW(Ver.X-1) that is in a format compatible by the FW(Ver.X-1) and is used by the FW(Ver.X-1) is stored in the nonvolatile data area B.

Note that the main system area in which FW targeted for execution is stored and the nonvolatile data area corresponding to the main system area will be hereinafter referred to as effective area or active area. Hereinafter, the FW stored in the effective area or active area will be referred to as effective FW or active FW. Hereinafter, the data stored in the effective area or active area will be referred to as effective data or active data. Note that the main system area in which FW not targeted for execution is stored and the nonvolatile data area corresponding to the main system area will be hereinafter referred to as reserve area.

Note that a hatched area in Fig. 11 indicates the effective area or active area, and a white area indicates the reserve area. This similarly applies to the following drawings.

In step S1, the high-performance ECU 211 receives, through OTA, a FW update request from, for example, an external server or the like via the communication unit 22 or the like. The FW update request includes, for example, FW for upgrade (hereinafter, referred to as FW for update).

In step S2, the FW update request is provided to the main module 271.

In step S3, the main module 271 transitions to an update mode. This forces the high-performance ECU 211 to temporarily stop its normal operation, making the normal operations of the vehicle 1 such as the driving disabled temporarily.

In step S4, the main module 271 transmits a backup request to the backup module 272.

In step S5, the backup module 272 copies the data in the active nonvolatile data area to the reserve nonvolatile data area. As a result, the data in the reserve nonvolatile data area is updated to the data in the active nonvolatile data area, and both the pieces of data are synchronized accordingly.

For example, the data in the reserve nonvolatile data area B is updated to the data for the FW(Ver.X) in the active nonvolatile data area A, and the data in the nonvolatile data area A and the data in the nonvolatile data area B are synchronized accordingly.

In step S6, the backup module 272 notifies the main module 271 of the completion of the backup.

In step S7, the main module 271 writes the FW for update to the reserve main system area. As a result, the FW in the reserve main system area is updated to the FW for update.

For example, the FW in the main system area B is updated to FW(Ver.X+1) for update that is the next version of the FW. As a result, as illustrated in B of Fig. 11, compared to the state in A of Fig. 11, the FW in the main system area B is updated to the latest FW(Ver.X+1), and the data in the nonvolatile data area B is updated to the data for FW(Ver.X) that is the previous version of the FW.

In step S8, the main module 271 changes a boot system. That is, the main module 271 swaps the active area with the reserve area, and sets the FW stored in the active area after the change as the target for execution. As a result, the FW set as the target for execution is booted at the next and subsequent boot-ups of the high-performance ECU 211.

For example, as illustrated in B of Fig. 11, the main system area B and the nonvolatile data area B are set as active areas, and the main system area A and the nonvolatile data area A are set as reserve areas. Then, the FW(Ver.X+1) in the main system area B is set as the target for execution, and the FW(Ver.X+1) is booted at the next and subsequent boot-ups of the high-performance ECU 211.

Thereafter, the FW update processing of the high-performance ECU 211 is brought to an end. Then, the update mode of the high-performance ECU 211 is disabled.

### <System boot processing of high-performance ECU 211>

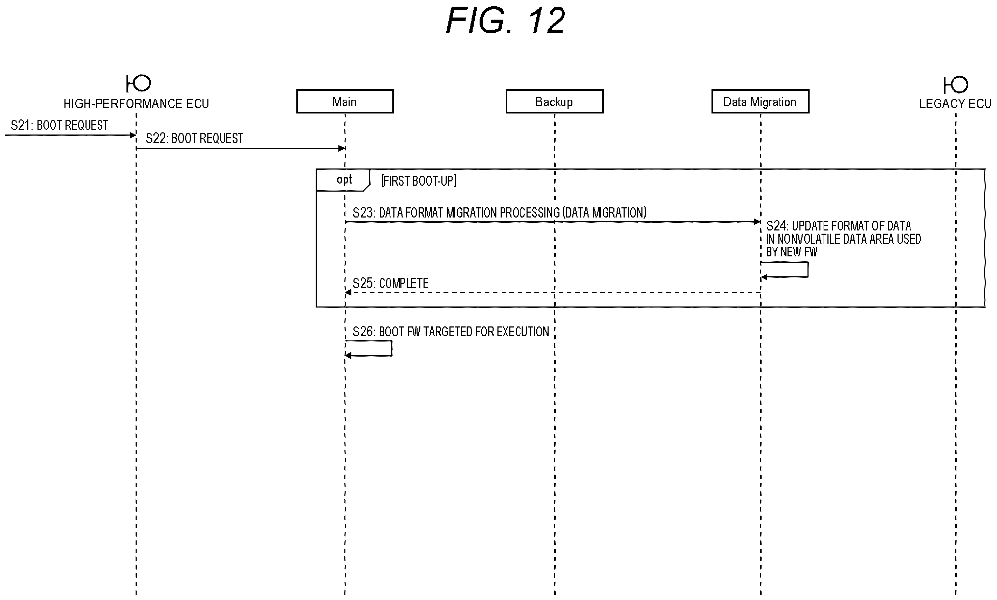

Next, system boot processing performed by the high-performance ECU 211 will be described with reference to the sequence diagram in Fig. 12.

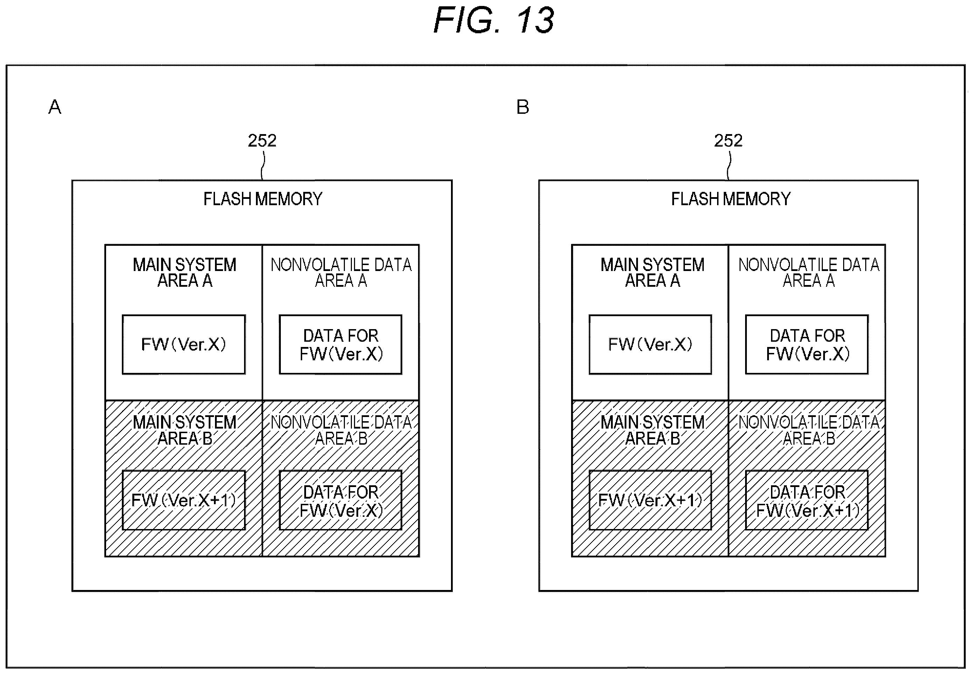

Note that it is assumed hereinafter that the flash memory 252 is in a state illustrated in A of Fig. 13, similar to the state in B of Fig. 11 described above.

In step S21, the high-performance ECU 211 receives a boot request from the vehicle control ECU 21 or the like, for example.

In step S22, the boot request is provided to the main module 271.

Next, in a case where the high-performance ECU 211 is booted for the first time after the FW update processing, that is, at the first boot-up after the FW update processing, steps S23 to S25 are performed.

Specifically, in step S23, the main module 271 requests the data migration module 273 to perform data format migration processing (data migration).

In step S24, the data migration module 273 updates the format of the data in the nonvolatile data area used by the FW after upgrade (hereinafter, referred to as new FW). That is, the data migration module 273 converts the format of the data in the nonvolatile data area used by the new FW into a format compatible with the new FW.

For example, as illustrated in B of Fig. 13, data in the nonvolatile data area B used by FW(Ver. X+1) that is the new FW is converted into a format compatible with the FW(Ver. X+1). That is, the data for the FW(Ver.X) stored in the nonvolatile data area B is converted into data for the FW(Ver.X+1). This makes the FW(Ver.X+1) stored in the main system area B executable.

In step S25, the data migration module 273 notifies the main module 271 of the completion of the data migration.

Thereafter, the processing proceeds to step S26.

Note that, in a case where the format of the data for the new FW is not different from the format for the previous FW, it is possible to skip steps S23 to S25.

On the other hand, in a case where the high-performance ECU 211 is booted for the second or subsequent time after the FW update processing, steps S23 to S25 are skipped, and the processing proceeds to step S26.

In step S26, the main module 271 boots the FW targeted for execution. That is, the main module 271 is booted after at least a part of the FW targeted for execution is loaded into the RAM 253.

For example, after at least a part of the FW(Ver. X+1) stored in the main system area B is loaded into the RAM 253, the main module 271 is booted. Then, the data for the FW(Ver.X+1) stored in the nonvolatile data area B is loaded, as necessary, into the RAM 253 and used while FW(Ver.X+1) data is running.

Thereafter, the system boot processing is brought to an end.

### <Rollback processing of high-performance ECU 211>

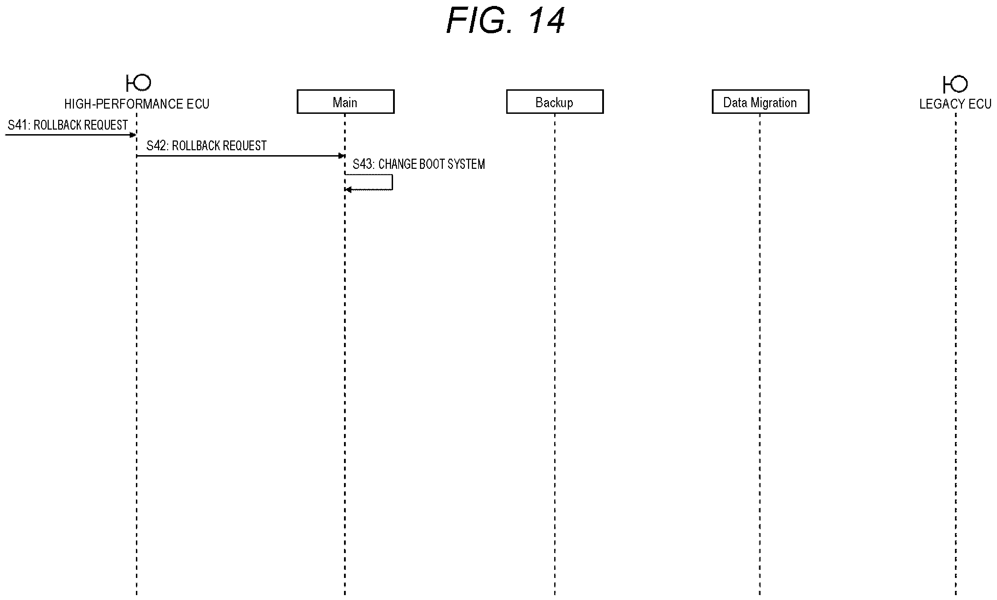

Next, rollback processing performed by the high-performance ECU 211 will be described with reference to the sequence diagram in Fig. 14.

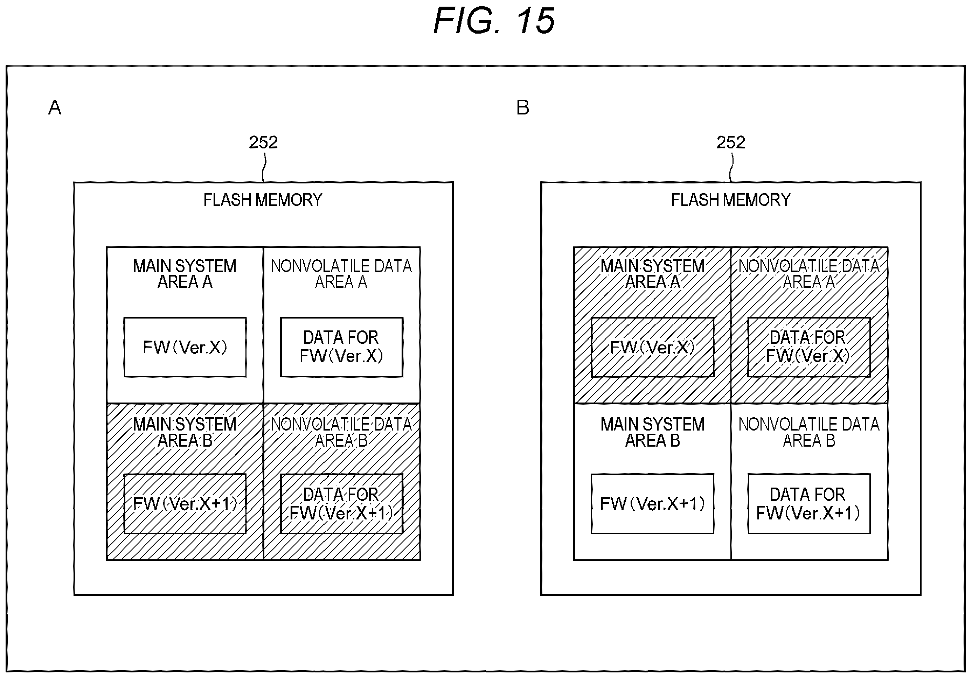

Note that it is assumed hereinafter that the flash memory 252 is in a state illustrated in A of Fig. 15, similar to the state in B of Fig. 13 described above.

In step S41, the high-performance ECU 211 receives, through OTA, a rollback request from, for example, an external server or the like via the communication unit 22 or the like.

In step S42, the rollback request is provided to the main module 271.

In step S43, the boot system is changed in a manner similar to step S8 in Fig. 10.

For example, as illustrated in B of Fig. 15, the main system area B and the nonvolatile data area B are set as active areas, and the main system area A and the nonvolatile data area A are set as reserve areas. Then, the FW(Ver.X) in the main system area A is set as the target for execution, and the FW(Ver.X) is booted at the next and subsequent boot-ups of the high-performance ECU 211.

As described above, even after the FW is updated and the data migration is performed, the FW rollback can be properly performed. That is, the data for the FW(Ver.X) corresponding to the FW(Ver.X) that is the previous version of the FW remains in the nonvolatile data area A as it is. Therefore, it is possible to run the FW(Ver.X) that is the previous version of the FW as it is even without the need for specific data conversion or the like after the rollback.

Thereafter, the rollback processing is brought to an end.

Here, during the above-described FW update processing of the high-performance ECU 211 in Fig. 10, the data in the active nonvolatile data area is copied to the reserve nonvolatile data area in step S5. Therefore, as the amount of data in the nonvolatile data area increases, the time required to copy the data in the nonvolatile data area becomes longer, and the time required for the FW update processing also becomes longer. During the FW update processing, the vehicle 1 is unable to perform its normal operations such as driving, and as a result, there is a possibility that user convenience will decrease.

To address the above, a method for shortening the time required for the FW update processing will be described below.

### <Data backup processing of high-performance ECU 211>

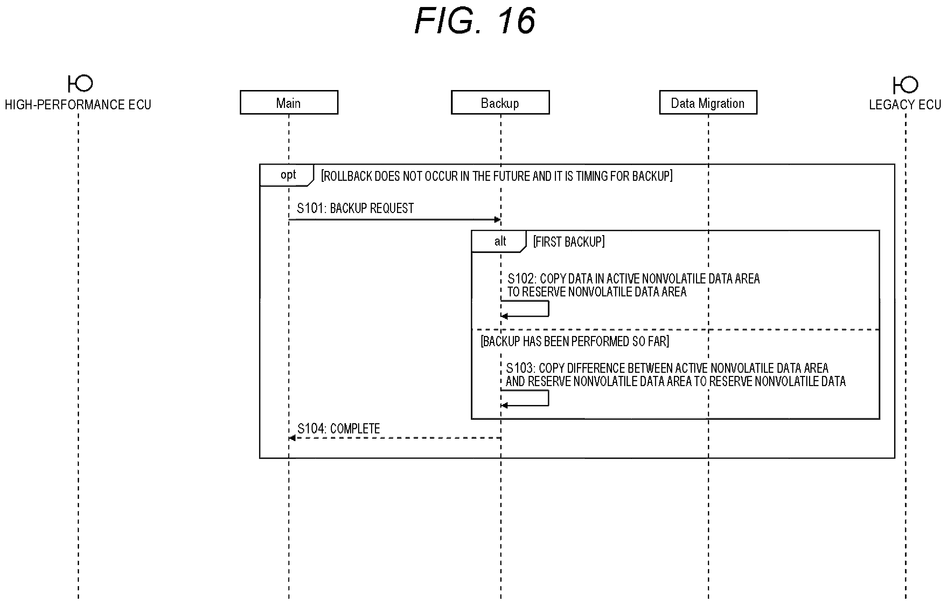

First, data backup processing of the high-performance ECU 211 to be performed after the FW update will be described with reference to the sequence diagram in Fig. 16.

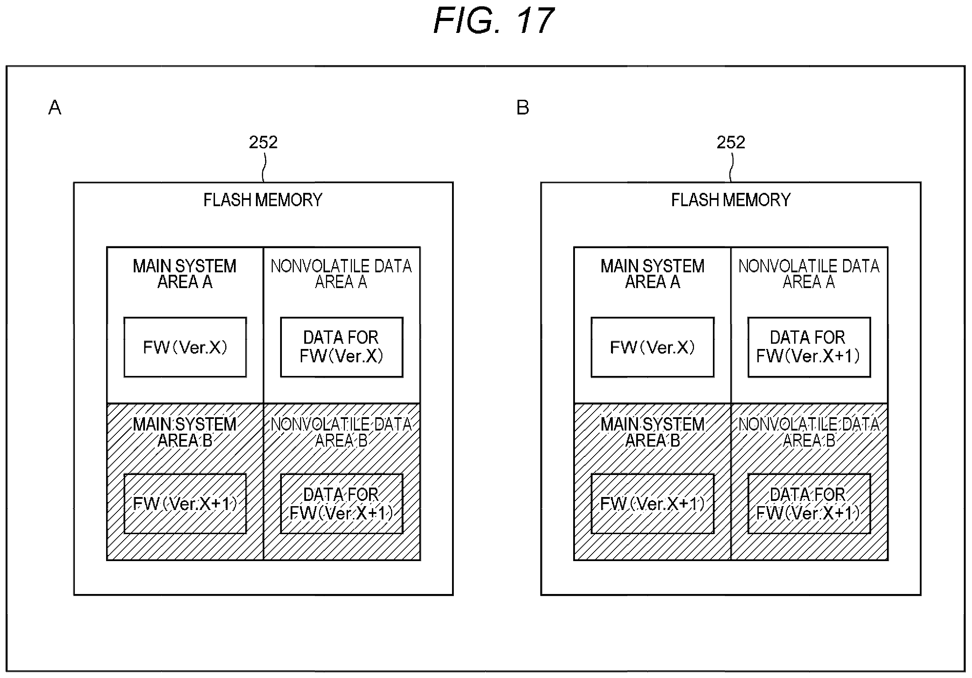

Note that it is assumed hereinafter that the flash memory 252 is in a state illustrated in A of Fig. 17, similar to the state in B of Fig. 13 described above.

For example, in a case where the main module 271 determines that the rollback does not occur in the future and it is the timing for backup, steps S101 to S104 are performed.

Here, a specific example of the method for determining whether or not the rollback occurs in the future will be described.

For example, the main module 271 determines that there is a possibility that the rollback will occur in the future until a notification indicating that the rollback does not occur in the future is given from the FW provider or the like. On the other hand, for example, the main module 271 determines that the rollback does not occur in the future in a case where the notification indicating that the rollback does not occur in the future has been given from the FW provider or the like through OTA or the like.

Alternatively, for example, the main module 271 determines that there is a possibility that the rollback will occur in the future until a prescribed time has elapsed from the last update of the FW of the high-performance ECU 211. On the other hand, for example, the main module 271 determines that the rollback does not occur in the future after the prescribed time has elapsed from the last update of the FW of the high-performance ECU 211.

Note that the prescribed time may be preset to a predetermined time, such as one week or one month. Alternatively, for example, the prescribed may be specified by the FW provider or the like at the time of FW update or the like.

Furthermore, the backup timing is set to, for example, timing at which the vehicle 1 is less likely to be used. For example, the backup timing is set to when the vehicle 1 is charging and a predetermined date and time. The predetermined date and time is set to, for example, a predetermined time every day, a predetermined time on a predetermined day of the week, or a predetermined time on a predetermined date, or the like.

Then, in step S101, the main module 271 transmits the backup request to the backup module 272.

In response to the request, in a case where this backup is the first backup, that is, in a case where this backup is the first backup after the FW update, step S102 is performed.

Specifically, in step S102, the data in the active nonvolatile data area is copied to the reserve nonvolatile data area in a manner similar to S5 in Fig. 10.

For example, as illustrated in B of Fig. 17, the data for the FW(Ver.X+1) in the active nonvolatile data area B is copied to the reserve nonvolatile data area A. For example, the data in the reserve nonvolatile data area A is updated to the data for the FW(Ver.X+1) in the active nonvolatile data area B, and the data in the nonvolatile data area A and the data in the nonvolatile data area B are synchronized accordingly. That is, the data for the FW(Ver.X+1) in the nonvolatile data area B is backed up to the nonvolatile data area A.

Thereafter, the processing proceeds to step S104.

On the other hand, in a case where the backup has been performed so far, that is, in a case where this backup is the second or subsequent backup after the FW update, step S103 is performed.

Specifically, in step S103, the backup module 272 copies a difference between the active nonvolatile data area and the reserve nonvolatile data area to the reserve nonvolatile data area.

For example, the backup module 272 copies a difference between the data in the active nonvolatile data area and the data in the reserve nonvolatile data area to the reserve nonvolatile data area. That is, data that exists in the active nonvolatile data area but does not exist in the data in the reserve nonvolatile data area is copied to the reserve nonvolatile data area.

Furthermore, for example, the backup module 272 deletes a difference between the data in the active nonvolatile data area and the data in the reserve nonvolatile data area from the reserve nonvolatile data area. That is, data that exists in the reserve nonvolatile data area but does not exist in the data in the active nonvolatile data area is deleted from the reserve nonvolatile data area.

This makes the data in the active nonvolatile data area and the data in the reserve nonvolatile data area synchronized.

For example, data that exists in the active nonvolatile data area B but does not exist in the reserve nonvolatile data area A is copied to the reserve nonvolatile data area A. Furthermore, data that exists in the reserve nonvolatile data area A but does not exist in the active nonvolatile data area B is deleted from the nonvolatile data area A. This makes the data in the reserve nonvolatile data area A and the data for the FW(Ver.X+1) in the active nonvolatile data area B synchronized as illustrated in B of Fig. 17.

Thereafter, the processing proceeds to step S104.

In step S104, the backup module 272 notifies the main module 271 of the completion of the backup.

Thereafter, the backup processing of the high-performance ECU 211 is brought to an end.

As a result, after it is determined that the rollback does not occur in the future, for example, the data in the reserve nonvolatile data area and the data in the active nonvolatile data area are synchronized periodically and match accordingly.

### <Second embodiment of FW update processing of high-performance ECU 211>

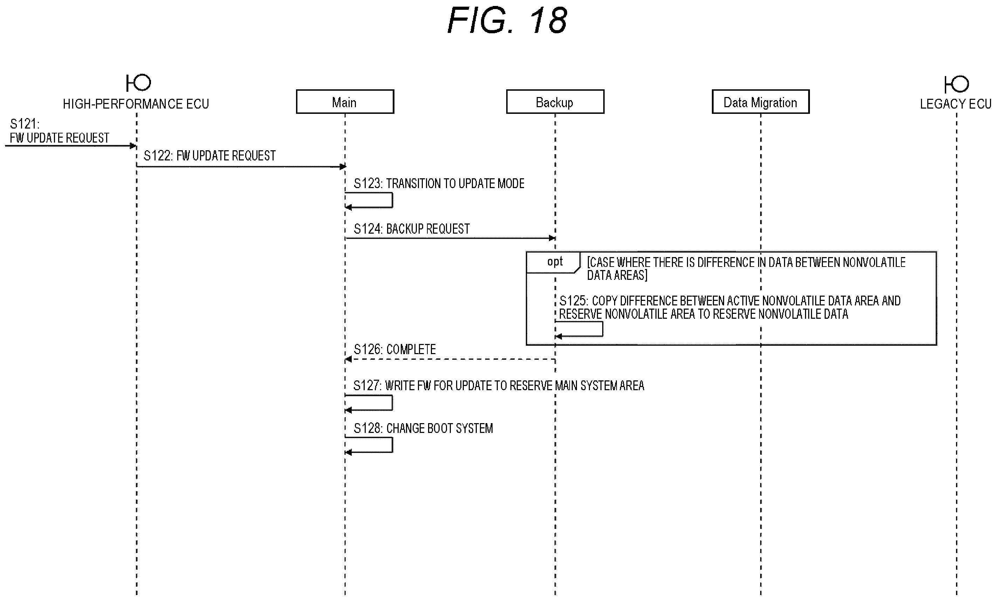

First, a second embodiment of the FW update processing of the high-performance ECU 211 will be described with reference to the sequence diagram in Fig. 18.

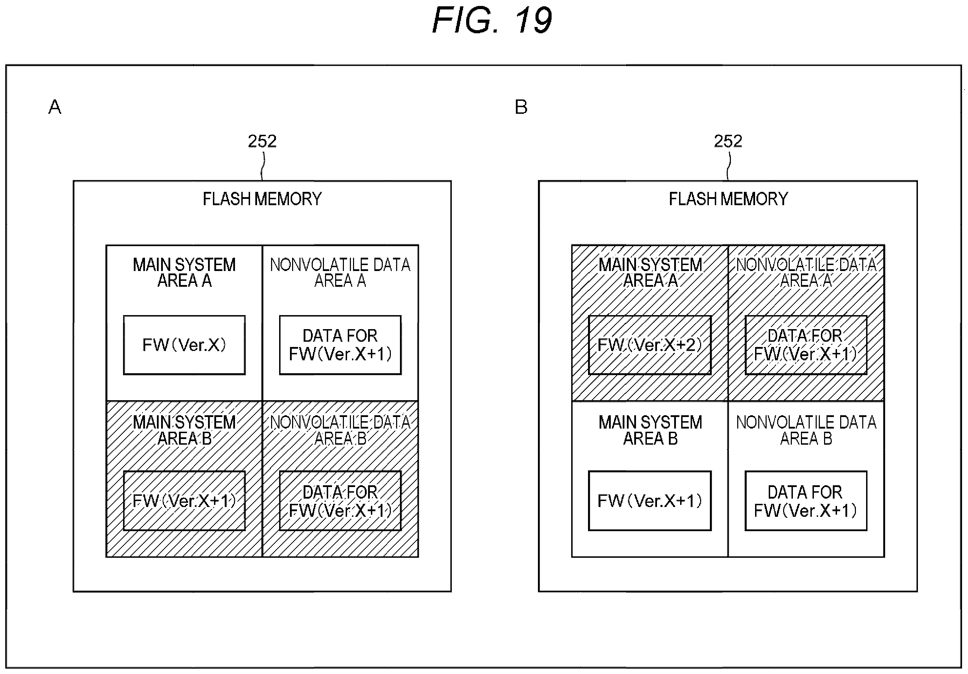

Note that it is assumed hereinafter that the flash memory 252 is in a state illustrated in A of Fig. 19, similar to the state in B of Fig. 17 described above.

In steps S121 to S124, processes similar steps S1 to S4 in Fig. 10 are performed.

Then, in a case where there is a difference in data between the nonvolatile data areas, step S125 is performed.

Specifically, in step S125, a difference between the active nonvolatile data area and the reserve nonvolatile data area is copied to the reserve nonvolatile data area in a manner similar to S103 in Fig. 16. This makes the data in the reserve nonvolatile data area and the data in the active nonvolatile data area synchronized.

In steps S126 to S128, processes similar to steps S6 to S8 in Fig. 10 are performed.

As a result, for example, as illustrated in B of Fig. 19, the FW in the main system area A is updated to FW(Ver.X+2). Furthermore, the main system area A and the nonvolatile data area A are set as active areas, and the main system area B and the nonvolatile data area B are set as reserve areas. Then, the FW(Ver.X+2) in the main system area A is set as the target for execution, and the FW(Ver.X+2) is booted at the next and subsequent boot-ups of the high-performance ECU 211.

As described above, during the FW update, only a difference between the active nonvolatile data area and the reserve nonvolatile data area is copied to the reserve nonvolatile data area, which shortens the time required to copy data in the nonvolatile data area. As a result, the time required for the FW update is shortened.

### <First embodiment of FW update processing of legacy ECU 212>

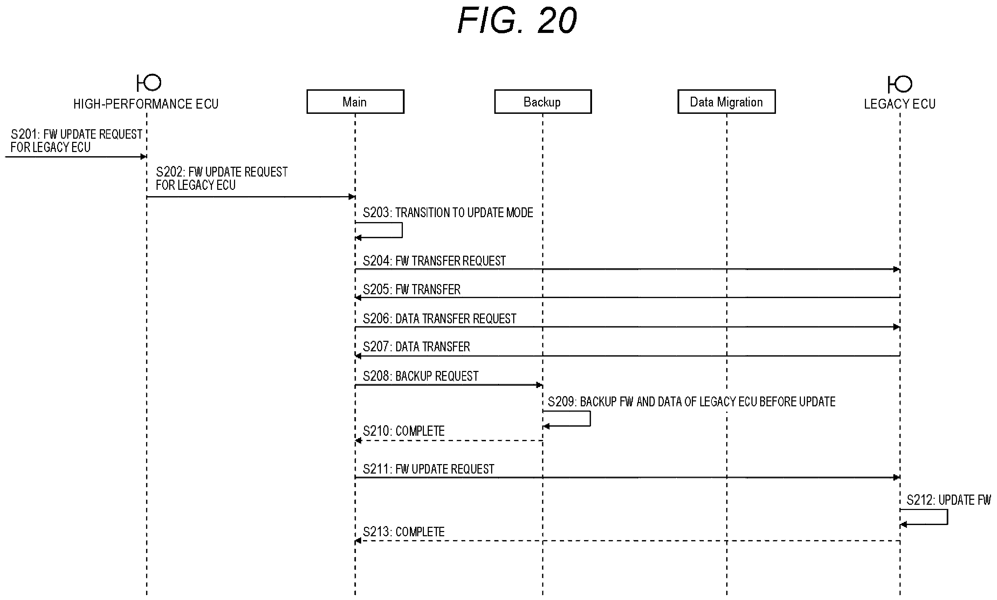

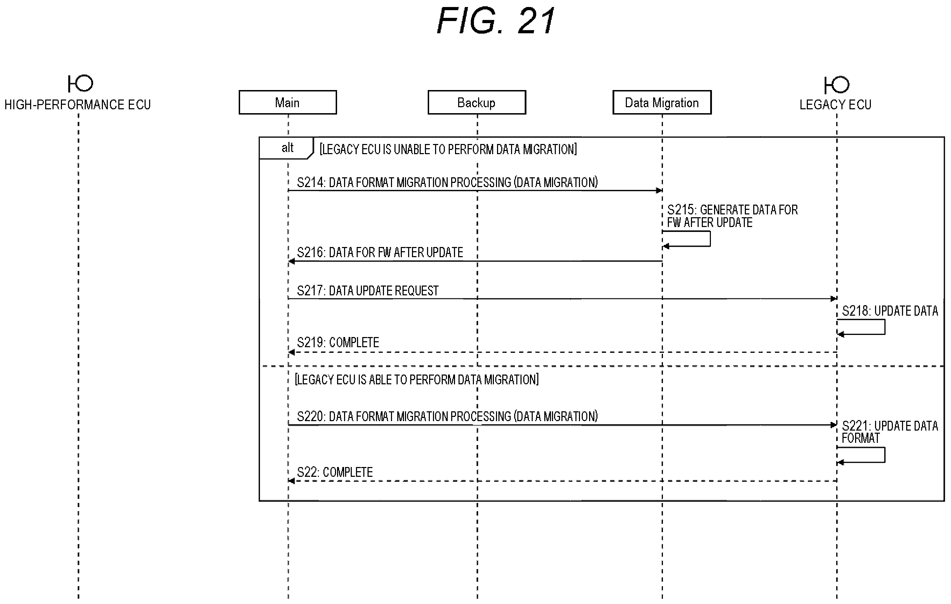

Next, a first embodiment of FW update processing of the legacy ECU 212 will be described with reference to the sequence diagrams in Figs. 20 and 21.

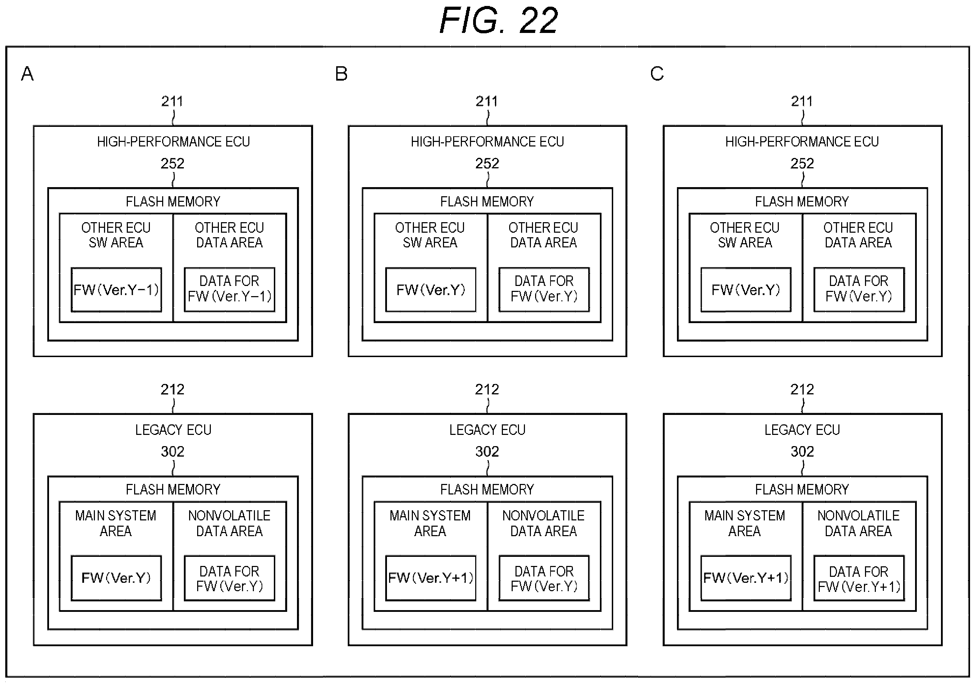

Note that it is assumed hereinafter that the flash memory 252 of the high-performance ECU 211 and the flash memory 302 of the legacy ECU 212 are in a state illustrated in A of Fig. 22.

Specifically, it is assumed that the FW(Ver.Y) currently targeted for execution on the legacy ECU 212 is stored in the main system area of the flash memory 302 of the legacy ECU 212. It is assumed that data for the FW(Ver.Y) that is in a format compatible with the FW(Ver.Y) and is used by the FW(Ver.Y) is stored in the nonvolatile data area of the flash memory 302 of the legacy ECU 212. It is assumed that FW(Ver.Y-1) that is the previous version of the FW is stored in the other ECU SW area of the flash memory 252 of the high-performance ECU 211. It is assumed that data for the FW(Ver.Y-1) that is in a format compatible with the FW(Ver.Y-1) and is used by the FW(Ver.Y-1) is stored in the other ECU data area of the flash memory 252 of the high-performance ECU 211.

In step S201, the high-performance ECU 211 receives, through OTA, a FW update request for the legacy ECU 212 from, for example, an external server or the like via the communication unit 22 or the like. The FW update request for the legacy ECU 212 includes, for example, FW for upgrade (hereinafter, referred to as FW for update) of the legacy ECU 212.

In step S202, the FW update request for the legacy ECU 212 is provided to the main module 271 of the high-performance ECU 211.

In step S203, the main module 271 of the high-performance ECU 211 transitions to the update mode. This forces the high-performance ECU 211 to temporarily stop its normal operation, making the normal operations of the vehicle 1 such as the driving disabled temporarily.

In step S204, the main module 271 of the high-performance ECU 211 transmits a FW transfer request to the legacy ECU 212.

Then, the main module 321 of the legacy ECU 212 receives the FW transfer request from the high-performance ECU 211.

In step S205, the FW is transferred from the legacy ECU 212 to the main module 271 of the high-performance ECU 211.

Specifically, the main module 321 of the legacy ECU 212 transmits FW before update, the FW being stored in the main system area of the flash memory 302 and currently active, to the high-performance ECU 211.

Then, the main module 271 of the high-performance ECU 211 receives the FW from the legacy ECU 212.

As a result, for example, the FW(Ver. Y) stored in the main system area of the legacy ECU 212 is transferred from the legacy ECU 212 to the high-performance ECU 211.

In step S206, the main module 271 of the high-performance ECU 211 transmits a data transfer request to the legacy ECU 212.

Then, the main module 321 of the legacy ECU 212 receives the data transfer request from the high-performance ECU 211.

In step S207, the data is transferred from the legacy ECU 212 to the main module 271 of the high-performance ECU 211.

Specifically, the main module 321 of the legacy ECU 212 transmits data before update, the data being stored in the nonvolatile data area of the flash memory 302 and currently active, to the high-performance ECU 211.

Then, the main module 271 of the high-performance ECU 211 receives the data from the legacy ECU 212.

As a result, for example, the data for the FW(Ver. Y) stored in the nonvolatile data area of the legacy ECU 212 is transferred from the legacy ECU 212 to the high-performance ECU 211.

In step S208, the main module 271 of the high-performance ECU 211 transmits a backup request to the backup module 272.

In step S209, the backup module 272 of the high-performance ECU 211 backs up the FW and data of the legacy ECU 212 before update.

Specifically, the backup module 272 copies the FW received from the legacy ECU 212 to the other ECU SW area of the flash memory 252. As a result, the FW in the other ECU SW area of the high-performance ECU 211 is updated to the FW of the legacy ECU 212, with the FW currently active and before update. That is, the FW of the legacy ECU 212 before update is backed up to the other ECU SW area of the high-performance ECU 211.

Specifically, the backup module 272 copies the data received from the legacy ECU 212 to the other ECU data area of the flash memory 252. As a result, the data in the other ECU data area of the high-performance ECU 211 is updated to the data for the FW of the legacy ECU 212, with the FW being currently active and before update. That is, the data for the FW of the legacy ECU 212 before update is backed up to the other ECU data area of the high-performance ECU 211.

For example, as illustrated in B of Fig. 22, the FW in the other ECU SW area of the high-performance ECU 211 is updated to the FW(Ver. Y) that is currently active and before update. The data in the other ECU data area of the high-performance ECU 211 is updated to the data for the FW(Ver.Y) that is currently active and before update.

In step S210, the backup module 272 of the high-performance ECU 211 notifies the main module 271 of the completion of the backup.

In step S211, the main module 271 of the high-performance ECU 211 transmits a FW update request to the legacy ECU 212. The FW update request includes, for example, FW for update.

Then, the main module 321 of the legacy ECU 212 receives the FW update request from the high-performance ECU 211.

In step S212, the main module 321 of the legacy ECU 212 updates the FW. Specifically, the main module 321 writes the FW for update to the main system area of the flash memory 302. As a result, the FW in the main system area of the flash memory 302 is updated to the FW for update.

For example, as illustrated in B of Fig. 22, the FW in the main system area of the legacy ECU 212 is updated to the latest FW(Ver.Y+1).

In step S213, the main module 321 of the legacy ECU 212 notifies the main module 271 of the high-performance ECU 211 of the completion of the FW update.

Next, in a case where the legacy ECU 212 is unable to perform data migration, steps S214 to S219 are performed.

Specifically, in step S214, the main module 271 of the high-performance ECU 211 requests the data migration module 273 to perform data format migration processing (data migration).

In step S215, the data migration module 273 of the high-performance ECU 211 generates data for the FW after the update. Specifically, the data migration module 273 generates data obtained by converting the data in the other ECU data area of the high-performance ECU 211 into a format compatible with the FW after the update.

As a result, for example, data for the FW(Ver.Y+1) is generated in a format compatible with the FW(Ver.Y+1) after the update.

In step S216, the data migration module 273 of the high-performance ECU 211 transmits the data for the FW after the update to the main module 271.

In step S217, the main module 271 of the high-performance ECU 211 transmits a data update request to the legacy ECU 212. The data update request includes, for example, the data for the FW after the update.

Then, the main module 321 of the legacy ECU 212 receives the data update request from the high-performance ECU 211.

In step S218, the main module 321 of the legacy ECU 212 updates the data. Specifically, the main module 321 copies the data for the FW after the update received from the high-performance ECU 211 to the nonvolatile data area of the flash memory 302. As a result, the data in the nonvolatile data area of the flash memory 302 is updated to the data for the FW after the update.

For example, as illustrated in C of Fig. 22, the data in the nonvolatile data area of the legacy ECU 212 is updated to the data for the FW(Ver.Y+1). As a result, the legacy ECU 212 becomes capable of executing the FW(Ver.Y+1).

In step S219, the main module 321 of the legacy ECU 212 notifies the main module 271 of the high-performance ECU 211 of the completion of the data update.

Thereafter, the FW update processing of the legacy ECU 212 is brought to an end.

On the other hand, in a case where the legacy ECU 212 is able to perform data migration, steps S220 to S222 are performed.

Specifically, in step S220, the main module 271 of the high-performance ECU 211 requests the legacy ECU 212 to perform data format migration processing (data migration).

In step S221, the data migration module 322 of the legacy ECU 212 updates the format of the data in the nonvolatile data area of the legacy ECU 212.

For example, as illustrated in C of Fig. 22, the data for the FW(Ver.Y) in the nonvolatile data area of the legacy ECU 212 is updated to the data for the FW(Ver.Y+1) in the format compatible with the FW(Ver.Y+1). As a result, the legacy ECU 212 becomes capable of executing the FW(Ver.Y+1).

In step S222, the data migration module 273 of the legacy ECU 212 notifies the main module 271 of the high-performance ECU 211 of the completion of the data migration.

Thereafter, the FW update processing of the legacy ECU 212 is brought to an end. Then, the update mode of the high-performance ECU 211 is disabled.

### <Rollback processing of legacy ECU 212>

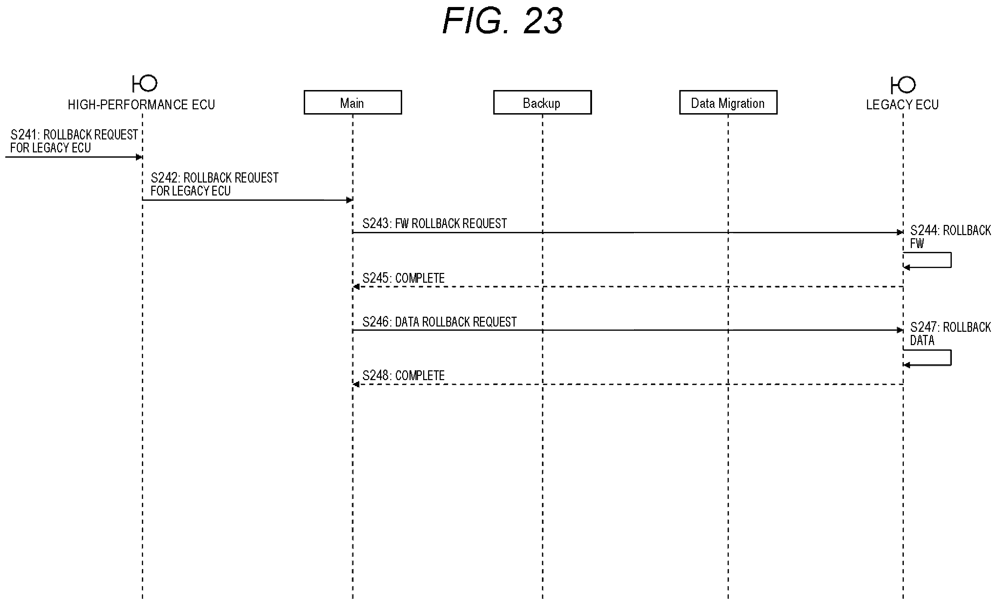

Next, rollback processing of the legacy ECU 212 will be described with reference to the sequence diagram in Fig. 23.

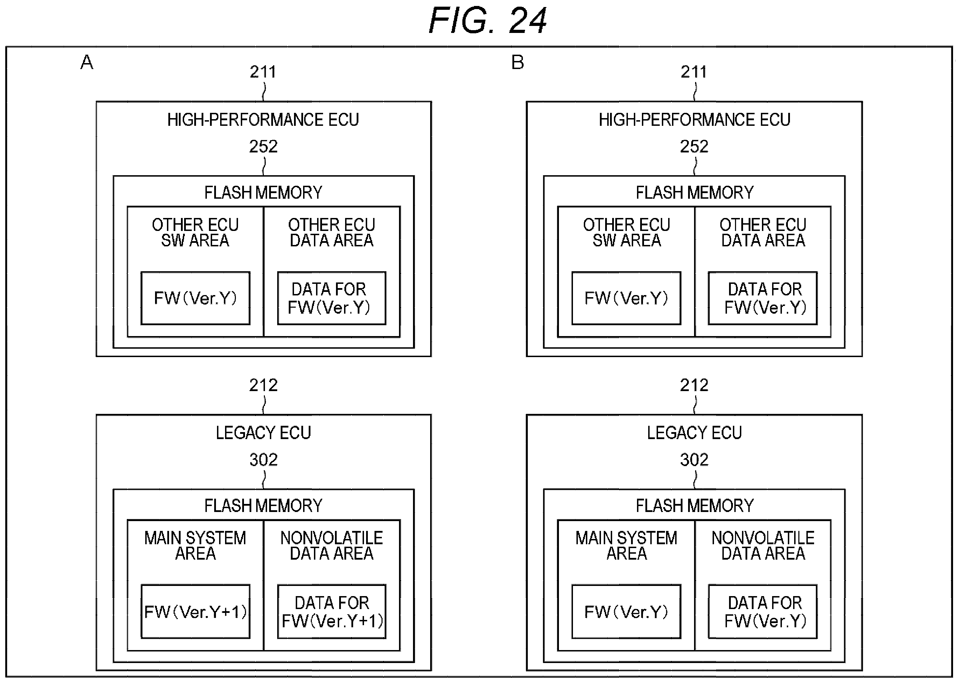

Note that it is assumed hereinafter that the flash memory 252 of the high-performance ECU 211 and the flash memory 302 of the legacy ECU 212 are in a state illustrated in A of Fig. 24, similar to the state in C of Fig. 22 described above.

In step S241, the high-performance ECU 211 receives, through OTA, a rollback request for the legacy ECU 212 from, for example, an external server or the like via the communication unit 22 or the like.

In step S242, the rollback request is provided to the main module 271 of the high-performance ECU 211.

In step S243, the main module 271 of the high-performance ECU 211 transmits a FW rollback request to the legacy ECU 212. The FW rollback request includes, for example, the FW stored in the other ECU SW area of the high-performance ECU 211, that is, the previous version of the FW.

Then, the main module 321 of the legacy ECU 212 receives the FW rollback request from the high-performance ECU 211.

In step S244, the main module 321 of the legacy ECU 212 rolls back the FW. Specifically, the main module 321 copies the FW included in the FW rollback request, that is, the previous version of the FW, to the main system area of the flash memory 302. As a result, the FW in the main system area of the legacy ECU 212 is rolled back to the previous version of the FW.

For example, as illustrated in B of Fig. 24, the FW in the main system area of the legacy ECU 212 is rolled back from the FW(Ver.Y+1) to the FW(Ver.Y).

In step S245, the main module 321 of the legacy ECU 212 notifies the main module 271 of the high-performance ECU 211 of the completion of the FW rollback.

In step S246, the main module 271 of the high-performance ECU 211 transmits a data rollback request to the legacy ECU 212. The data rollback request includes, for example, the data stored in the other ECU data area of the high-performance ECU 211, that is, the data for the previous version of the FW.

Then, the main module 321 of the legacy ECU 212 receives the data rollback request from the high-performance ECU 211.

In step S247, the main module 321 of the legacy ECU 212 rolls back the data. Specifically, the main module 321 copies the data included in the data rollback request, that is, the data for the previous version of the FW, to the nonvolatile data area of the flash memory 302. As a result, the data in the nonvolatile data area of the legacy ECU 212 is rolled back to the data for the previous version of the FW.

For example, as illustrated in B of Fig. 24, the data in the nonvolatile data area of the legacy ECU 212 is rolled back from the data for the FW(Ver.Y+1) to the data for the FW(Ver.Y). As a result, the legacy ECU 212 becomes capable of executing the FW(Ver. Y) that is the previous version of the FW.

In step S248, the main module 321 of the legacy ECU 212 notifies the main module 271 of the high-performance ECU 211 of the completion of the data rollback.

Thereafter, the rollback processing of the legacy ECU 212 is brought to an end.

As described above, since the high-performance ECU 211 backs up the previous version of the FW of the legacy ECU 212, the rollback of the FW of the legacy ECU 212 is easily performed. Furthermore, since the high-performance ECU 211 backs up the data for the previous version of the FW of the legacy ECU 212, the legacy ECU 212 can boot the previous version of the FW as it is without the need for specific data conversion or the like.

Here, during the above-described FW update processing of the legacy ECU 212 in Fig. 20, the data in the nonvolatile data area of the legacy ECU 212 is copied to the other ECU data area of the high-performance ECU 211 in step S209. Therefore, as the amount of data in the nonvolatile data area of the legacy ECU 212 increases, the time required to copy the data becomes longer, and the time required for the FW update processing of the legacy ECU 212 also becomes longer. During the FW update processing of the legacy ECU 212, the vehicle 1 is unable to perform its normal operations such as driving, and as a result, there is a possibility that user convenience will decrease.

To address the above, a method for shortening the time required for the FW update processing of the legacy ECU 212 will be described below.

### <Data backup processing of legacy ECU 212>

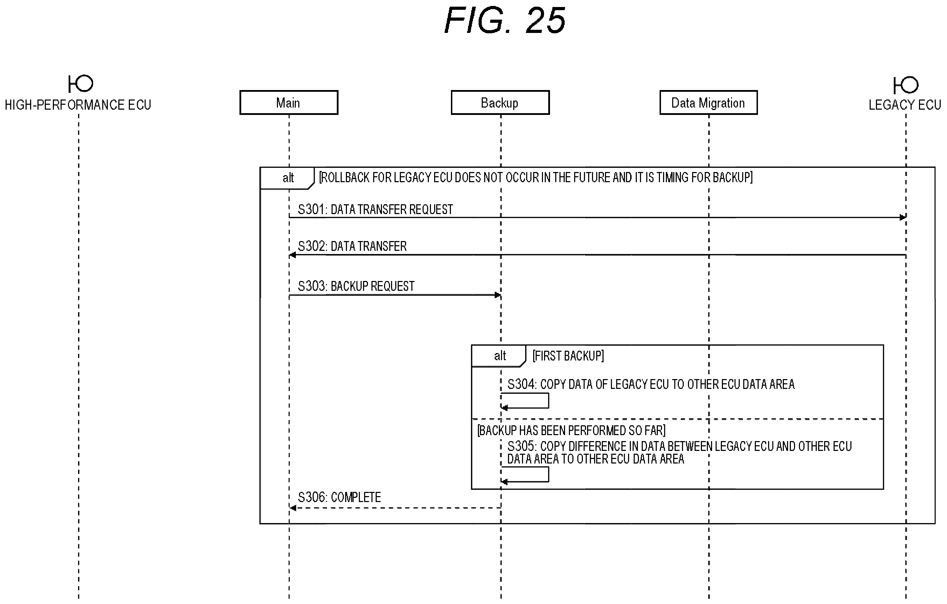

First, data backup processing of the legacy ECU 212 to be performed after the update of the FW of the legacy ECU 212 will be described with reference to the sequence diagram in Fig. 25.

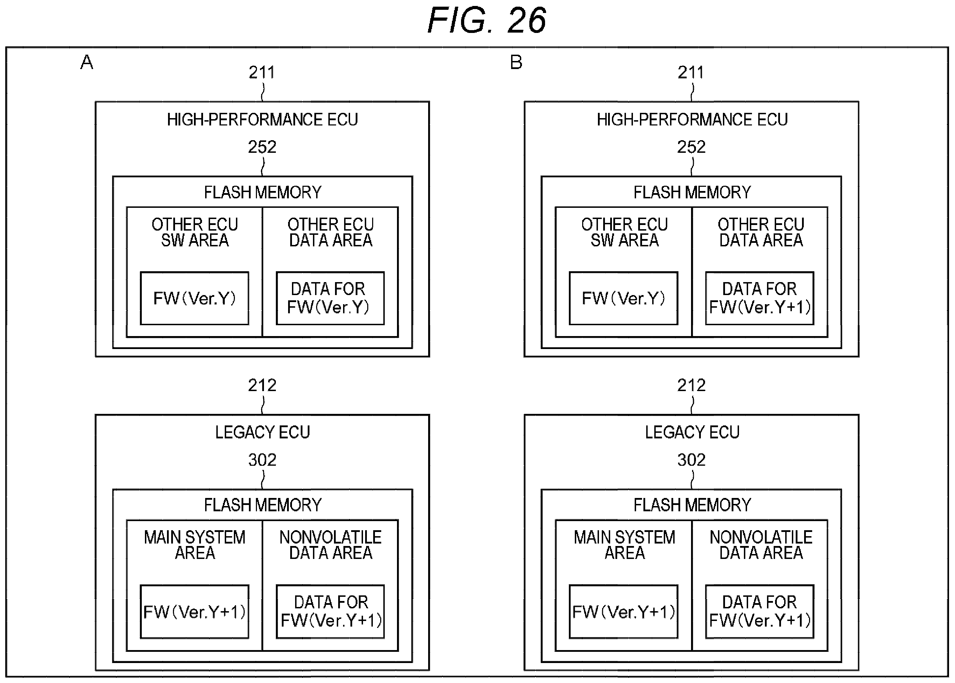

Note that it is assumed hereinafter that the flash memory 252 of the high-performance ECU 211 and the flash memory 302 of the legacy ECU 212 are in a state illustrated in A of Fig. 26, similar to the state in C of Fig. 22 described above.

For example, in a case where the main module 271 of the high-performance ECU 211 determines that the rollback of the legacy ECU 212 does not occur in the future and it is the timing for backup, steps S301 to S306 are performed.

Note that the method for determining whether or not the rollback of the legacy ECU 212 occurs in the future is similar to the method for determining whether or not the rollback of the high-performance ECU 211 occurs during the backup processing of the high-performance ECU 211 described above with reference to Fig. 16, for example.

Furthermore, the timing for backup is also similar to the timing of the backup processing of the high-performance ECU 211 described above with reference to Fig. 16, for example.

In steps S301 to S303, processes similar to steps S206 to S208 in Fig. 20 described above are performed.

Then, in a case where this backup is the first backup, that is, in a case where this backup is the first backup after the update of the FW of the legacy ECU 212, step S304 is performed.

Specifically, in step S304, the backup module 272 of the high-performance ECU 211 copies the data of the legacy ECU 212 to the other ECU data area. That is, the backup module 272 copies the data received from the legacy ECU 212 to the other ECU data area of the flash memory 252. As a result, the data in the other ECU data area of the high-performance ECU 211 is updated to the data in the nonvolatile data area of the legacy ECU 212, and the data in the nonvolatile data area of the legacy ECU 212 and the data in the other ECU data area of the high-performance ECU 211 synchronized accordingly.

For example, as illustrated in B of Fig. 26, the data in the other ECU data area of the high-performance ECU 211 is updated to the data for the FW(Ver.Y+1) in the nonvolatile data area of the legacy ECU 212, and the data in the nonvolatile data area of the legacy ECU 212 and the data in the other ECU data area of the high-performance ECU 211 are synchronized accordingly. That is, the data for the FW(Ver.Y+1) in the nonvolatile data area of the legacy ECU 212 is backed up to the other ECU data area of the high-performance ECU 211.

Thereafter, the processing proceeds to step S306.

On the other hand, in a case where the backup of the legacy ECU 212 has been performed so far, that is, in a case where this backup is the second or subsequent backup after the update of the FW of the legacy ECU 212, step S305 is performed.

Specifically, in step S305, the backup module 272 of the high-performance ECU 211 copies, to the other ECU data area, a difference between the data of the legacy ECU 212 and the other ECU data area.

For example, the backup module 272 copies a difference between the data in the other ECU data area of the high-performance ECU 211 and the data in the nonvolatile data area of the legacy ECU 212 to the other ECU data area. That is, data that exists in the nonvolatile data area of the legacy ECU 212 but does not exist in the other ECU data area of the high-performance ECU 211 is copied to the other ECU data area.

Furthermore, for example, the backup module 272 deletes a difference between the data in the nonvolatile data area of the legacy ECU 212 and the data in the other ECU data area of the high-performance ECU 211 from the other ECU data area. That is, data that exists in the other ECU data area of the high-performance ECU 211 but does not exist in the nonvolatile data area of the legacy ECU 212 is deleted from the other ECU data area.

This makes the data in the nonvolatile data area of the legacy ECU 212 and the data in the other ECU data area of the high-performance ECU 211 synchronized.

For example, as illustrated in B of Fig. 26, the data in the other ECU data area of the high-performance ECU 211 is synchronized with the data for the FW(Ver.Y+1) in the nonvolatile data area of the legacy ECU 212.

Thereafter, the processing proceeds to step S306.

In step S306, the backup module 272 of the high-performance ECU 211 notifies the main module 271 of the completion of the backup.

Thereafter, the data backup processing of the legacy ECU 212 is brought to an end.

As a result, after it is determined that the rollback of the legacy ECU 212 does not occur in the future, for example, the other ECU data area of the high-performance ECU 211 and the nonvolatile data area of the legacy ECU 212 are synchronized periodically, and their respective pieces of data match accordingly.

### <Second embodiment of FW update processing of legacy ECU 212>

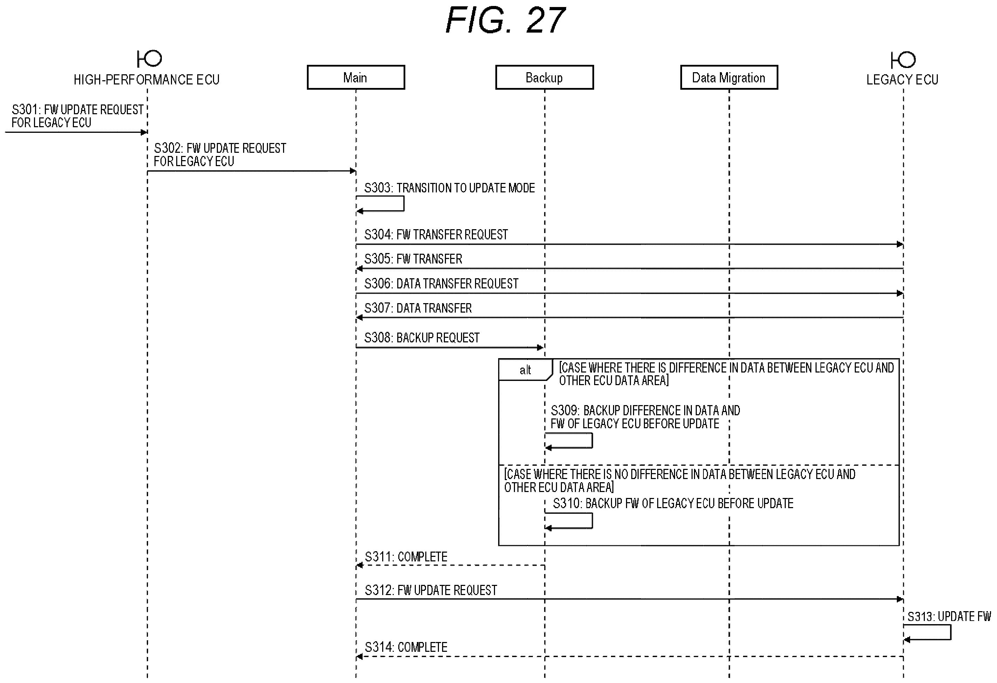

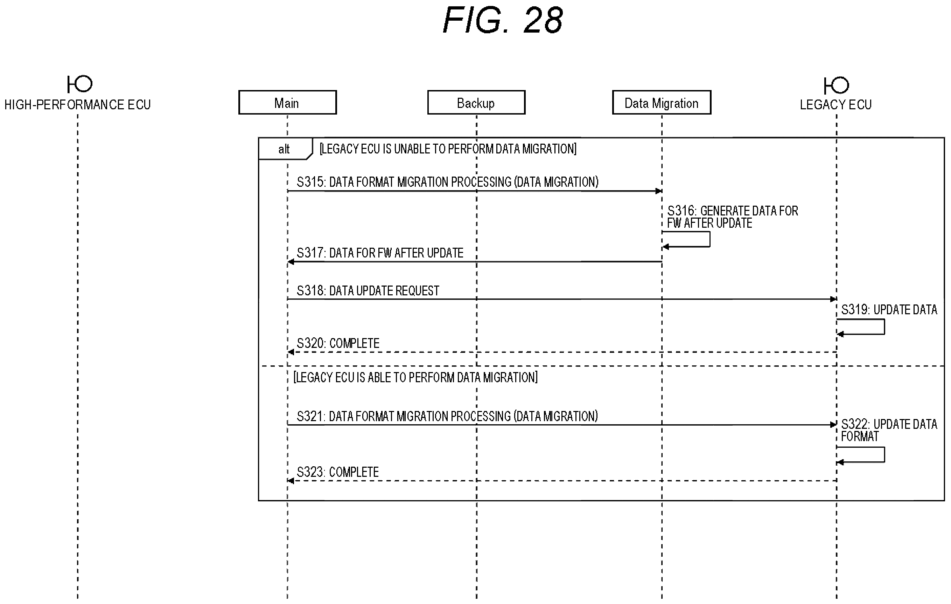

Next, a second embodiment of the FW update processing of the legacy ECU 212 will be described with reference to the sequence diagrams in Figs. 27 and 28.

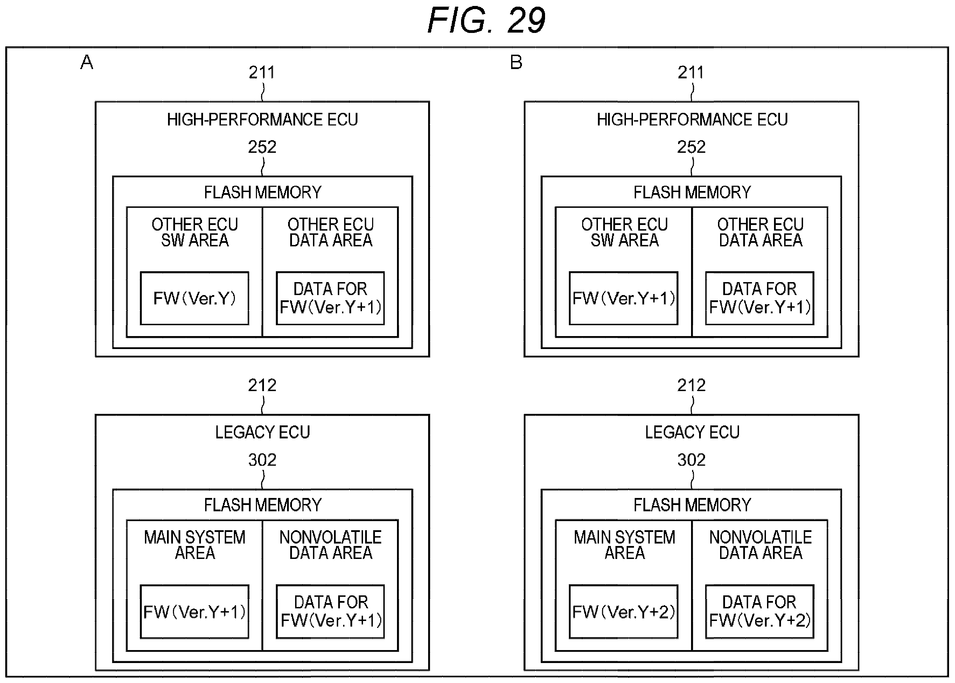

Note that it is assumed hereinafter that the flash memory 252 of the high-performance ECU 211 and the flash memory 302 of the legacy ECU 212 are in a state illustrated in A of Fig. 29, similar to the state in B of Fig. 26 described above.

In steps S301 to S308, processes similar to steps S201 to S208 in Fig. 20 are performed.

Then, in a case where the backup module 272 of the high-performance ECU 211 determines that there is a difference between the data of the legacy ECU 212 and the other ECU data area, that is, in a case where the backup module 272 determines that there is a difference between the data in the nonvolatile data area of the legacy ECU 212 and the data in the other ECU data area of the high-performance ECU 211, step S309 is performed.

Specifically, in step S309, the backup module 272 of the high-performance ECU 211 backs up a difference in the data and the FW of the legacy ECU 212 before the update.

Specifically, the backup module 272 copies the FW received from the legacy ECU 212 to the other ECU SW area of the flash memory 252, in a manner similar to S209 in Fig. 20 described above.

Furthermore, the backup module 272 copies, to the other ECU data area, a difference between the data of the legacy ECU 212 and the other ECU data area, in a manner similar to S305 in Fig. 25 described above.

As a result, for example, as illustrated in B of Fig. 29, the FW in the other ECU SW area of the high-performance ECU 211 is updated to the FW(Ver.Y+1). Furthermore, for example, the data in the other ECU data area of the high-performance ECU 211 is synchronized with the data for the FW(Ver.Y+1) in the nonvolatile data area of the legacy ECU 212. As a result, the data for the FW(Ver.Y+1) and the FW(Ver.Y+1) before the update are backed up by the high-performance ECU 211.

Thereafter, the processing proceeds to step S311.

On the other hand, in a case where the backup module 272 of the high-performance ECU 211 determines that there is no difference between the data of the legacy ECU 212 and the other ECU data area, that is, in a case where the backup module 272 determines that there is no difference between the data in the nonvolatile data area of the legacy ECU 212 and the data in the other ECU data area of the high-performance ECU 211, step S310 is performed.

Specifically, in step S310, the backup module 272 of the high-performance ECU 211 backs up the FW of the legacy ECU 212 before the update. Specifically, the backup module 272 copies the FW received from the legacy ECU 212 to the other ECU SW area of the flash memory 252, in a manner similar to S209 in Fig. 20 described above.

As a result, for example, as illustrated in B of Fig. 29, the FW in the other ECU SW area of the high-performance ECU 211 is updated to the FW(Ver.Y+1). Furthermore, for example, the data in the other ECU data area of the high-performance ECU 211 is already synchronized with the data for the FW(Ver.Y+1) in the nonvolatile data area of the legacy ECU 212. As a result, the data for the FW(Ver.Y+1) and the FW(Ver.Y+1) before the update are backed up by the high-performance ECU 211.

Thereafter, the processing proceeds to step S311.

In steps S311 to S323, processes similar to step S210 in Fig. 20 to step S222 in Fig. 21 described above are performed.

For example, as illustrated in B of Fig. 29, the FW in the main system area of the legacy ECU 212 is updated to the FW(Ver.Y+2). Furthermore, the data in the nonvolatile data area of the legacy ECU 212 is updated to the data for the FW(Ver.Y+2) in a format compatible with the FW(Ver.Y+2). As a result, the legacy ECU 212 becomes capable of executing the FW(Ver.Y+2).

Thereafter, the FW update processing of the legacy ECU 212 is brought to an end.

As described above, during the update of the FW of the legacy ECU 212, only the difference between the data in the nonvolatile data area of the legacy ECU 212 and the other ECU data area of the high-performance ECU 211 is copied to the other ECU data area of the high-performance ECU 211. Therefore, the time required to copy the data of the legacy ECU 212 is shortened. As a result, the time required for the update of the FW of the legacy ECU 212 is shortened.

### <<4. Modification>>

Hereinafter, modifications of the above-described embodiments of the present technology will be described.

For example, in a case where the legacy ECU 212 is capable of storing two or more versions of the FW, the high-performance ECU 211 need not necessarily back up the FW of the legacy ECU 212. Furthermore, in this case, the other ECU SW area of the high-performance ECU 211 may be deleted.

For example, the high-performance ECU 211 may be provided with two other ECU SW areas and two other ECU data areas for each legacy ECU 212. Then, the high-performance ECU 211 may back up the FW targeted for execution and the data for the FW, and the old version of the FW and data for the FW.

The present technology is applicable to, for example, a configuration with a nonvolatile and rewritable memory (storage unit), other than a flash memory.

The present technology is applicable to a device or a system that performs software update or rollback through OTA or the like, other than a vehicle. Possible examples of the application include a smartphone, a PC, a tablet terminal, a digital camera, a robot, a mobile object other than a vehicle, and the like.

### <<5. Others>>

### <Configuration example of computer>

The above-described series of processing can be performed by hardware or software. In a case where the series of processing is performed by software, a program that configures the software is installed in a computer. Here, examples of the computer include a computer incorporated in dedicated hardware, a general-purpose personal computer that can execute various functions by being installed with various programs, and the like.

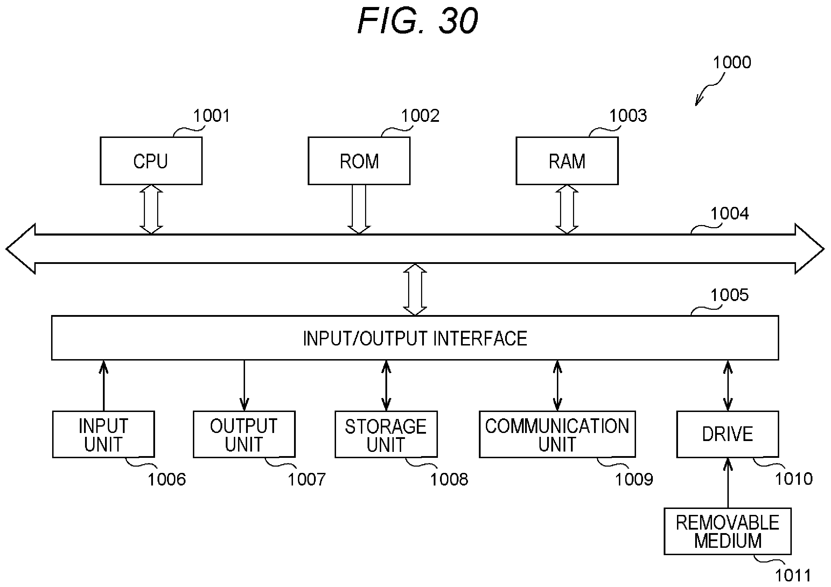

Fig. 30 is a block diagram illustrating a configuration example of hardware of a computer that performs the above-described series of processing in accordance with a program.

In a computer 1000, a central processing unit (CPU) 1001, a read only memory (ROM) 1002, and a random access memory (RAM) 1003 are interconnected via a bus 1004.

An input/output interface 1005 is further connected to the bus 1004. An input unit 1006, an output unit 1007, a storage unit 1008, a communication unit 1009, and a drive 1010 are connected to the input/output interface 1005.

The input unit 1006 includes an input switch, a button, a microphone, an imaging element, or the like. The output unit 1007 includes a display, a speaker, or the like. The storage unit 1008 includes a hard disk, a nonvolatile memory, or the like. The communication unit 1009 includes a network interface or the like. The drive 1010 drives a removable medium 1011 such as a magnetic disk, an optical disc, a magneto-optical disk, or a semiconductor memory.

In the computer 1000 configured as described above, the series of processing described above is performed, for example, by the CPU 1001 loading a program stored in the storage unit 1008 into the RAM 1003 via the input/output interface 1005 and the bus 1004 and executing the program.

The program executed by the computer 1000 (CPU 1001) can be provided by being recorded in the removable medium 1011 as a package medium or the like, for example. Furthermore, the program can be provided via a wired or wireless transmission medium such as a local area network, the Internet, or digital satellite broadcasting.

In the computer 1000, the program can be installed on the storage unit 1008 via the input/output interface 1005 with the removable medium 1011 attached to the drive 1010. Furthermore, the program can be received by the communication unit 1009 by means of the wired or wireless transmission medium to be installed on the storage unit 1008. Further, the program can be preinstalled on the ROM 1002 or the storage unit 1008.

Note that the program executed by the computer may be a program that performs processing in the time-series order described in the present specification, or may be a program that performs processing in parallel or at necessary timing such as when a call is made.

Furthermore, in the present specification, the system means a set of a plurality of components (devices, modules (parts), and the like), and it does not matter whether or not all the components are in the same housing. Therefore, a plurality of devices housed in separate casings and connected to each other via a network and a single device including a plurality of modules housed in a single casing are both systems.

Moreover, the embodiments of the present technology are not limited to the above-described embodiments, and various modifications can be made without departing from the gist of the present technology.

For example, the present technology may be embodied in cloud computing in which a function is executed by a plurality of devices via a network in a shared manner.

Furthermore, for example, each step described in the above-described sequence diagrams can be performed by one device or can be shared and performed by a plurality of devices.

Moreover, in a case where a single step includes a plurality of processes, the plurality of processes included in the single step can be performed by a single device or performed by a plurality of devices in a shared manner.

### <Combination example of configuration>

The present technology may also have the following configurations.

(1) An information processing device including:
   a software management unit that manages software; and
   a storage unit that includes a first software area, a second software area, a first data area corresponding to the first software area, and a second data area corresponding to the second software area, in which
   the software management unit stores first current software targeted for execution in one software area of the first software area or the second software area, stores first old software that is a version of software preceding the first current software in another software area, stores data in a format compatible with the first current software in one data area, corresponding to the one software area, of the first data area or the second data area, and stores data in a format compatible with the first old software in another data area.
(2) The information processing device according to the above (1), in which
   in a case of rolling back the first current software to the first old software, the software management unit performs control to execute the first old software in the another software area and use the data in the another data area.
(3) The information processing device according to the above (2), in which
   in a case of determining that the rollback from the first current software to the first old software does not occur, the software management unit updates the data in the another data area to the data in the one data area.
(4) The information processing device according to the above (3), in which
   after updating the data in the another data area, the software management unit copies a difference between the data in the one data area and the data in the another data area to the another data area at a predetermined timing.
(5) The information processing device according to the above (4), in which
   in a case of upgrading the first current software to new software that is a version of software after the first current software, the software management unit stores the new software in the another software area, and copies, when there is a difference between the data in the one data area and the data in the another data area, the difference between the data in the one data area and the data in the another data area to the another data area.
(6) The information processing device according to the above (5), in which
   the software management unit converts the data in the another data area into a format compatible with the new software.
(7) The information processing device according to any one of the above (3) to (6), the information processing device being installed in a vehicle, in which
   in a case of determining that the rollback from the first current software to the first old software does not occur, the software management unit updates the data in the another data area to the data in the one data area while the vehicle is charging.
(8) The information processing device according to the above (1), in which
   in a case of upgrading the first current software to new software that is a version of software after the first current software, the software management unit stores the new software in the another software area, updates the data in the another data area to the data in the one data area, and converts the data in the another data area after update into a format compatible with the new software.
(9) The information processing device according to the above (1), in which
   the storage unit further includes a third data area, and
   the software management unit stores, in the third data area, old data that is data in a format compatible with second old software, the second old software being a version of software preceding second current software targeted for execution on another information processing device.
(10) The information processing device according to the above (9), in which
   in a case of rolling back the second current software to the second old software, the software management unit transmits the old data in the third data area to the another information processing device.
(11) The information processing device according to the above (9) or (10), in which
   in a case of upgrading the second current software to new software that is a version of software after the second current software, the software management unit acquires, from the another information processing device, current data that is data in a format compatible with the second current software, and updates the data in the third data area to the current data.
(12) The information processing device according to the above (11), in which
   the software management unit generates new data obtained by converting the current data into a format compatible with the new software, and transmits the new data to the another information processing device.
(13) The information processing device according to any one of the above (9) to (12), in which
   the storage unit further includes a third software area, and
   the software management unit stores the second old software in the third software area.
(14) The information processing device according to the above (13), in which
   in a case of rolling back the second current software to the second old software, the software management unit transmits the second old software in the third software area and the old data in the third data area to the another information processing device.
(15) The information processing device according to the above (13) or (14), in which
   in a case of upgrading the second current software to new software that is a version of software after the second current software, the software management unit acquires, from the another information processing device, the second current software and current data that is data in a format compatible with the second current software, updates the software in the third software area to the second current software, and updates the data in the third data area to the current data.
(16) The information processing device according to any one of the above (1) to (15), in which
   the storage unit includes a flash memory.
(17) The information processing device according to any one of the above (1) to (16), in which the information processing device being installed in a vehicle.
(18) An information processing method causing an information processing device to perform processing, the processing including:
   storing current software targeted for execution in one software area of a first software area or a second software area of a storage unit and storing old software that is a version of software preceding the current software in another software area; and
   storing data in a format compatible with the current software in one data area, corresponding to the one software area, of the first data area or the second data area of the storage unit and storing data in a format compatible with the old software in another data area.

Note that the effects described in the present specification are merely examples and are not limited, and other effects may be provided.

### REFERENCE SIGNS LIST

- 1: Vehicle
- 11: Vehicle control system
- 21: Vehicle control system
- 201: Information processing system
- 211-1 to 211-m: High-performance ECU
- 212-1 to 212-n: Legacy ECU
- 251: CPU
- 252: Flash memory
- 253: RAM
- 261: Software management unit
- 271: Main module
- 272: Backup Module
- 273: Data migration module
- 301: CPU
- 302: Flash memory
- 303: RAM
- 304: External NVRAM
- 311: Software management unit
- 321: Main module
- 322: Data migration module

## Claims

1. An information processing device comprising:
a software management unit that manages software; and
a storage unit that includes a first software area, a second software area, a first data area corresponding to the first software area, and a second data area corresponding to the second software area, wherein
the software management unit stores first current software targeted for execution in one software area of the first software area or the second software area, stores first old software that is a version of software preceding the first current software in another software area, stores data in a format compatible with the first current software in one data area, corresponding to the one software area, of the first data area or the second data area, and stores data in a format compatible with the first old software in another data area.

2. The information processing device according to claim 1, wherein
in a case of rolling back the first current software to the first old software, the software management unit performs control to execute the first old software in the another software area and use the data in the another data area.

3. The information processing device according to claim 2, wherein
in a case of determining that the rollback from the first current software to the first old software does not occur, the software management unit updates the data in the another data area to the data in the one data area.

4. The information processing device according to claim 3, wherein
after updating the data in the another data area, the software management unit copies a difference between the data in the one data area and the data in the another data area to the another data area at a predetermined timing.

5. The information processing device according to claim 4, wherein
in a case of upgrading the first current software to new software that is a version of software after the first current software, the software management unit stores the new software in the another software area, and copies, when there is a difference between the data in the one data area and the data in the another data area, the difference between the data in the one data area and the data in the another data area to the another data area.

6. The information processing device according to claim 5, wherein
the software management unit converts the data in the another data area into a format compatible with the new software.

7. The information processing device according to claim 3, the information processing device being installed in a vehicle, wherein
in a case of determining that the rollback from the first current software to the first old software does not occur, the software management unit updates the data in the another data area to the data in the one data area while the vehicle is charging.

8. The information processing device according to claim 1, wherein
in a case of upgrading the first current software to new software that is a version of software after the first current software, the software management unit stores the new software in the another software area, updates the data in the another data area to the data in the one data area, and converts the data in the another data area after update into a format compatible with the new software.

9. The information processing device according to claim 1, wherein
the storage unit further includes a third data area, and
the software management unit stores, in the third data area, old data that is data in a format compatible with second old software, the second old software being a version of software preceding second current software targeted for execution on another information processing device.

10. The information processing device according to claim 9, wherein
in a case of rolling back the second current software to the second old software, the software management unit transmits the old data in the third data area to the another information processing device.

11. The information processing device according to claim 9, wherein
in a case of upgrading the second current software to new software that is a version of software after the second current software, the software management unit acquires, from the another information processing device, current data that is data in a format compatible with the second current software, and updates the data in the third data area to the current data.

12. The information processing device according to claim 11, wherein
the software management unit generates new data obtained by converting the current data into a format compatible with the new software, and transmits the new data to the another information processing device.

13. The information processing device according to claim 9, wherein
the storage unit further includes a third software area, and
the software management unit stores the second old software in the third software area.

14. The information processing device according to claim 13, wherein
in a case of rolling back the second current software to the second old software, the software management unit transmits the second old software in the third software area and the old data in the third data area to the another information processing device.

15. The information processing device according to claim 13, wherein
in a case of upgrading the second current software to new software that is a version of software after the second current software, the software management unit acquires, from the another information processing device, the second current software and current data that is data in a format compatible with the second current software, updates the software in the third software area to the second current software, and updates the data in the third data area to the current data.

16. The information processing device according to claim 1, wherein
the storage unit includes a flash memory.

17. The information processing device according to claim 1, wherein
the information processing device being installed in a vehicle.

18. An information processing method causing an information processing device to perform processing, the processing comprising:
storing current software targeted for execution in one software area of a first software area or a second software area of a storage unit and storing old software that is a version of software preceding the current software in another software area; and
storing data in a format compatible with the current software in one data area, corresponding to the one software area, of the first data area or the second data area of the storage unit and storing data in a format compatible with the old software in another data area.
